(19) Europäisches Patentamt
European Patent Office
Office européen des brevets

(11) **EP 4 503 463 A1**

(12) **EUROPEAN PATENT APPLICATION**
published in accordance with Art. 153(4) EPC

(43) Date of publication:
**05.02.2025 Bulletin 2025/06**

(21) Application number: **23791169.8**

(22) Date of filing: **17.04.2023**

(51) International Patent Classification (IPC):
**H04B 7/06** (2006.01)

(52) Cooperative Patent Classification (CPC):
**H04B 7/0456; H04B 7/06; H04L 25/02**

(86) International application number:
**PCT/CN2023/088624**

(87) International publication number:
**WO 2023/202514 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2022 CN 202210407888**

(71) Applicant: **Huawei Technologies Co., Ltd.**
**Shenzhen, Guangdong 518129 (CN)**

(72) Inventors:
• **CHEN, Jiaxuan**
**Shenzhen, Guangdong 518129 (CN)**
• **HANG, Haicun**
**Shenzhen, Guangdong 518129 (CN)**
• **JIN, Huangping**
**Shenzhen, Guangdong 518129 (CN)**
• **LIANG, Jing**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD AND APPARATUS**

(57) This disclosure relates to a communication method and apparatus. A terminal device obtains M channel estimation results. The terminal device jointly compresses the M channel estimation results by using a first encoder network, to obtain N pieces of compressed information and first state information, where the first state information represents downlink channel information, the downlink channel information includes information about downlink channels corresponding to the M channel estimation results, and the first state information is used to determine next input information of the first encoder network. The terminal device sends the N pieces of compressed information to an access network device. Downlink channels are correlated in time domain. When compressed information is obtained, in addition to a current downlink channel, a historical downlink channel is also referenced, so that the compressed information can reflect downlink channels within more time, and time domain correlation between the channels is fully utilized. This helps improve precision of a downlink channel restored by an access network device.

```
                ┌──────────┐                          ┌──────────────┐
                │    UE    │                          │Access network│
                └──────────┘                          │    device    │
                ┌──────────────┐                      └──────────────┘
                │S501: Obtain M│
                │channel       │
                │estimation    │
                │results       │
                └──────────────┘
                ┌──────────────┐
                │S502: Jointly │
                │compress the M│
                │channel       │
                │estimation    │
                │results by    │
                │using a first │
                │encoder       │
                │network, to   │
                │obtain N      │
                │pieces of     │
                │compressed    │
                │information   │
                │and first     │
                │state         │
                │information   │
                └──────────────┘
          S503: N pieces of compressed information
          ──────────────────────────────────────────>
                                          ┌──────────────┐
                                          │S504: Decode  │
                                          │the N pieces  │
                                          │of compressed │
                                          │information by│
                                          │using a first │
                                          │decoder       │
                                          │network, to   │
                                          │obtain P      │
                                          │pieces of     │
                                          │restored      │
                                          │information   │
                                          │and fourth    │
                                          │state         │
                                          │information   │
                                          └──────────────┘
```

FIG. 5

**Description**

**CROSS-REFERENCE TO RELATED APPLICATIONS**

This application claims priority to Chinese Patent Application No. 202210407888.5, filed with the China National Intellectual Property Administration on April 19, 2022 and entitled "COMMUNICATION METHOD AND APPARATUS", which is incorporated herein by reference in its entirety.

**TECHNICAL FIELD**

This disclosure relates to the field of communication technologies, and in particular, to a communication method and apparatus.

**BACKGROUND**

A 5th generation (the 5th generation, 5G) mobile communication system has higher requirements on a system capacity, spectral efficiency, and the like. In the 5G communication system, application of a massive multiple-input multiple-output (massive multiple-input multiple-output, massive-MIMO) technology plays an important role in improving the spectral efficiency of the system. A base station can provide high-quality services for more user equipment (user equipment, UE) by using the massive-MIMO technology. A key step is that the base station performs precoding on downlink data. Spatial multiplexing (spatial multiplexing) may be implemented through precoding, interference between different data streams may be reduced, and a signal to interference plus noise ratio (signal to interference plus noise ratio, SINR) at a receiving end may be increased. This increases a system throughput rate. To more accurately perform precoding on downlink data of UE, the base station may obtain channel state information (channel state information, CSI) of a downlink channel, restore downlink channel information based on the CSI, and determine a precoding matrix by using the restored downlink channel information, to perform precoding. How to enable a base station to restore more accurate downlink channel information is a technical problem worth studying.

**SUMMARY**

This disclosure provides a communication method and apparatus, to improve precision of restoring downlink channel information by a network side.

According to a first aspect, a first communication method is provided. The method may be performed on a terminal device side. The method may be performed by using software, hardware, or a combination of software and hardware. For example, the method is performed by a terminal device, or is performed by a circuit system, or is performed by a large device including a terminal device. The circuit system can implement a function of the terminal device. The method includes: obtaining M channel estimation results, where M is a positive integer; jointly compressing the M channel estimation results by using a first encoder network, to obtain N pieces of compressed information and first state information, where the first state information represents downlink channel information, the first state information is used to determine next input information of the first encoder network, and N is a positive integer; and sending the N pieces of compressed information to an access network device. In the method, for example, the downlink channel information includes information about downlink channels corresponding to the M channel estimation results.

In this disclosure, in addition to compressed information, the first encoder network may further output the first state information. The first state information may represent the information about the downlink channels, and the first state information may be further used to determine the next input information of the first encoder network. This is equivalent to that when obtaining compressed information next time, in addition to referencing a downlink channel corresponding to a channel estimation result obtained next time, the first encoder network may further reference a downlink channel corresponding to a historical channel estimation result by using the first state information. Downlink channels are correlated in time domain. When compressed information is obtained, in addition to a current downlink channel, a historical downlink channel is also referenced, so that the compressed information can reflect downlink channels within more time, and time domain correlation between the channels is fully utilized. This helps improve precision of a downlink channel restored by an access network device.

In an optional implementation, each of the N pieces of compressed information corresponds to the M channel estimation results. Because the M channel estimation results are jointly compressed, each piece of compressed information can reflect the M channel estimation results, so that a more accurate downlink channel can be restored based on the N pieces of compressed information.

In an optional implementation, input information of the first encoder network is determined based on the M channel estimation results and second state information, where the second state information is state information output by the first encoder network last time. This is equivalent to that the input information of the first encoder network may be further determined based on the second state information, and the second state information can reflect a downlink channel within historical time, so that the first encoder network can effectively mine time domain correlation between channels. For example, because the first encoder network can obtain compressed information by comprehensively using historical downlink channel information and current downlink channel information, so that the compressed information can reflect downlink channels within more time, and time domain correlation between the channels is fully utilized. This helps improve precision of a downlink channel restored by an access network device.

In an optional implementation, the method further includes: receiving first signaling, where the first signaling indicates to reset state information of the first encoder network. If historical information of a downlink channel contained in state information output by the first encoder network last time differs greatly from downlink channel information reflected by a current channel estimation result due to a time-varying characteristic of the downlink channel, using the state information output by the first encoder network last time as an additional input of the first encoder network this time may not bring a performance gain, and even may cause negative impact. Therefore, a network state resetting process is introduced in this disclosure. Impact of the time-varying characteristic of the channel on channel compression and restoration processes can be reduced through network state resetting.

In an optional implementation, the first signaling indicates resetting start time and/or an offset; or the first signaling indicates resetting start time and/or an offset, and indicates a resetting periodicity. For example, if resetting is aperiodic, the first signaling may indicate the resetting start time and/or the offset; or if resetting is periodic, the first signaling may indicate the resetting start time and/or the offset, and indicate the resetting periodicity. The terminal device can determine a reset time domain position through indication of the first signaling.

In an optional implementation, input information of the first encoder network is determined based on the M channel estimation results; or input information of the first encoder network is determined based on the M channel estimation results and third state information, where the third state information is determined based on historical information of a downlink channel; or input information of the first encoder network is determined based on the M channel estimation results and K channel estimation results, where the K channel estimation results are historically obtained downlink channel estimation results; or input information of the first encoder network is determined based on the M channel estimation results, third state information, and K channel estimation results, where the K channel estimation results are historically obtained downlink channel estimation results, and the third state information is determined based on historical information of a downlink channel. For example, if network state resetting is performed, the input information of the first encoder network may no longer be determined based on state information output last time. For example, the input information of the first encoder network may be determined based on the M channel estimation results. This determining manner is relatively simple. Alternatively, the input information of the first encoder network may be determined based on the M channel estimation results and the third state information. The third state information is determined based on the historical information of the downlink channel, for example, determined based on historically obtained channel estimation results. These channel estimation results have been obtained by the terminal device, and may be locally stored in the terminal device. Therefore, it does not take excessive time for the terminal device to obtain the channel estimation results, and efficiency is relatively high. Alternatively, the input information of the first encoder network may be determined based on the M channel estimation results and the K channel estimation results. The K channel estimation results are, for example, historically obtained channel estimation results. The K channel estimation results have been obtained by the terminal device, and may be locally stored in the terminal device. Therefore, it does not take excessive time for the terminal device to obtain the K channel estimation results, and efficiency is relatively high. It can be learned that even if network state resetting is performed, the third state information and/or the K channel estimation results may be considered for the input information of the first encoder network, and both the third state information and the K channel estimation results reflect the historical information of the downlink channel. Therefore, when obtaining the N pieces of compressed information and the first state information, the first encoder network may reference downlink channels within more time, so that time domain correlation between channels can be fully utilized.

In an optional implementation, the method further includes: receiving second signaling from the access network device, where the second signaling indicates change information of the downlink channel, or indicates a first reference encoder network, or indicates a reference network including the first reference encoder network; and determining the first reference encoder network from a plurality of reference encoder networks based on the second signaling, where the first reference encoder network is used to determine the first encoder network. In this disclosure, one or more groups of reference networks may be obtained through training. Considering that a channel state (or communication scenario) is variable, optionally, one group of reference networks may be applicable to one type of channel state (or communication scenario). In this case, in different channel states, if corresponding reference encoder networks and reference decoder networks can be applied, information obtained based on the reference encoder networks and the reference decoder networks is better adapted to the channel states. For example, the access network device may determine the first reference encoder network based on a current channel state, and indicate the first reference encoder network to the terminal device, so that a reference network used by the access network device and the terminal device better complies with the current channel state, feedback performance of compressed information can be improved, and restoration precision of the access network device for the downlink channel can be improved.

In an optional implementation, the method further includes: determining change information of the downlink channel based on the M channel estimation results; and determining a first reference encoder network from a plurality of reference encoder networks based on the change information of the downlink channel, where the first reference encoder network is used to determine the first encoder network. A specific group of reference networks to be used may be determined by the access network device, or may be determined by the terminal device. For example, the terminal device may determine, based on the change information of the downlink channel, a reference encoder network to be used currently. Therefore, a reference network determining process is more flexible.

In an optional implementation, the method further includes: sending third signaling to the access network device, where the third signaling indicates the change information of the downlink channel, or indicates a first reference decoder network corresponding to the first reference encoder network, or indicates a reference network including the first reference encoder network. If the terminal device determines the first reference encoder network, the terminal device may indicate the first reference encoder network to the access network device. In this way, the access network device can determine the corresponding first reference decoder network accordingly, so that the access network device and the terminal device use a same group of reference networks.

According to a second aspect, a second communication method is provided. The method may be performed on an access network device side. The method may be performed by using software, hardware, or a combination of software and hardware. For example, the method is performed by an access network device, a large device including an access network device, or a circuit system. The circuit system can implement a function of the access network device. Alternatively, the method is performed by the access network device or a network element of the access network device with assistance of an AI module independent of the access network device. This is not limited. For example, the access network device is an access network device, for example, a base station. The method includes: receiving N pieces of compressed information from a terminal device, where N is a positive integer; and decoding the N pieces of compressed information by using a first decoder network, to obtain P pieces of restored information and fourth state information, where the fourth state information represents downlink channel information, the fourth state information is used to determine next input information of the first decoder network, and P is a positive integer. In the method, for example, the downlink channel information includes information about downlink channels corresponding to the N pieces of compressed information.

In an optional implementation, each of the P pieces of restored information corresponds to the N pieces of compressed information.

In an optional implementation, input information of the first decoder network is determined based on the N pieces of compressed information and fifth state information, where the fifth state information is state information output by the first decoder network last time.

In an optional implementation, the method further includes: sending first signaling, where the first signaling indicates to reset state information of a first encoder network, and the first encoder network corresponds to the first decoder network.

In an optional implementation, the first signaling indicates resetting start time and/or an offset; or the first signaling indicates resetting start time and/or an offset, and indicates a resetting periodicity.

In an optional implementation, input information of the first decoder network is determined based on the N pieces of compressed information; or input information of the first decoder network is determined based on the N pieces of compressed information and sixth state information, where the sixth state information is determined based on historical information of a downlink channel.

In an optional implementation, the method further includes: in one compressed information feedback periodicity, determining that no compressed information is received from the terminal device; estimating, based on historically received compressed information and/or historically obtained restored information, first compressed information corresponding to the compressed information feedback periodicity; and obtaining first restored information and eighth state information that are output by the first decoder network, where an input of the first decoder network is obtained based on seventh state information and the first compressed information, the seventh state information is state information output by the first decoder network last time, and the eighth state information is used to determine next input information of the first decoder network. In this disclosure, if the access network device receives no compressed information in a compressed information feedback periodicity, the access network device may estimate compressed information in the compressed information feedback periodicity based on historical information (including the historically received compressed information and/or the historically obtained restored information), so that a processing process of the access network device is continued. In addition, the compressed information is obtained by the access network device based on the historical information. Due to correlation between channels in time domain, accuracy of the compressed information is relatively high.

In an optional implementation, the method further includes: in one compressed information feedback periodicity, determining that no compressed information is received from the terminal device; and estimating, based on historically received compressed information and/or historically obtained restored information, restored information and ninth state information that correspond to the compressed information feedback periodicity, where the ninth state information is used to determine next input information of the first decoder network. If the access network device receives no compressed information in a compressed information feedback periodicity, the access network device may estimate restored information in the compressed information feedback periodicity based on historical information (including the historically received compressed information and/or the historically obtained restored information) without a need to estimate compressed information. Therefore, the restored information does not need to be obtained by using the first decoder network in the compressed information feedback periodicity, so that processing steps can be reduced, and power consumption can be reduced.

In an optional implementation, the method further includes: determining change information of the downlink channel based on the P pieces of restored information; and determining a first reference decoder network from a plurality of reference decoder networks based on the change information of the downlink channel, where the first reference decoder network is used to determine the first decoder network.

In an optional implementation, the method further includes: sending second signaling to the terminal device, where the second signaling indicates the change information of the downlink channel, or indicates a first reference encoder network, or indicates a reference network including the first reference encoder network, and the first reference encoder network corresponds to the first reference decoder network.

In an optional implementation, the method further includes: receiving third signaling from the terminal device, where the third signaling indicates the change information of the downlink channel, or indicates a first reference decoder network, or indicates a reference network including a first reference encoder network, and the first reference encoder network corresponds to the first reference decoder network; and determining the first reference decoder network from a plurality of reference decoder networks based on the third signaling, where the first reference decoder network is used to determine the first decoder network.

For technical effects brought by the second aspect or the optional implementations, refer to the descriptions of the technical effects of the first aspect or the corresponding implementations.

According to a third aspect, a third communication method is provided. The method may be performed on a terminal device side. The method may be performed by using software, hardware, or a combination of software and hardware. For example, the method is performed by a terminal device, or is performed by a circuit system, or is performed by a large device including a terminal device. The circuit system can implement a function of the terminal device. The method includes: obtaining M channel estimation results, where M is a positive integer; processing first information by using a first encoder network, to obtain N pieces of compressed information and first state information, where the first information is determined based on the M channel estimation results and tenth state information, the tenth state information represents downlink channel information, and N is a positive integer; and sending the N pieces of compressed information to an access network device.

In an optional implementation, each of the N pieces of compressed information corresponds to the M channel estimation results.

In an optional implementation, the tenth state information is state information output by the first encoder network last time. For example, the tenth state information in this case and the second state information described above may be same state information.

In an optional implementation, the method further includes: receiving first signaling, where the first signaling indicates to reset state information of the first encoder network.

In an optional implementation, the first signaling indicates resetting start time and/or an offset; or the first signaling indicates resetting start time and/or an offset, and indicates a resetting periodicity.

In an optional implementation, the tenth state information is an initial value (for example, the tenth state information in this case may be an initial value determined by the terminal device in the following embodiments); or the tenth state information is determined based on historical information of a downlink channel (for example, the tenth state information in this case and the third state information described above may be same state information).

In an optional implementation, the first information is determined based on the M channel estimation results, the tenth state information, and K channel estimation results, and the K channel estimation results are historically obtained downlink channel estimation results. For example, the tenth state information in this case and the third state information described above may be same state information.

In an optional implementation, the method further includes: receiving second signaling from the access network device, where the second signaling indicates change information of the downlink channel, or indicates a first reference encoder network, or indicates a reference network including the first reference encoder network; and determining the first reference encoder network from a plurality of reference encoder networks based on the second signaling, where the first reference encoder network is used to determine the first encoder network.

In an optional implementation, the method further includes: determining change information of the downlink channel based on the M channel estimation results; and determining a first reference encoder network from a plurality of reference encoder networks based on the change information of the downlink channel, where the first reference encoder network is used to determine the first encoder network.

In an optional implementation, the method further includes: sending third signaling to the access network device, where the third signaling indicates the change information of the downlink channel, or indicates a first reference decoder network corresponding to the first reference encoder network, or indicates a reference network including the first reference encoder network.

For technical effects brought by the third aspect or the optional implementations, refer to the descriptions of the technical effects of the first aspect or the corresponding implementations.

According to a fourth aspect, a fourth communication method is provided. The method may be performed on an access network device side. The method may be performed by using software, hardware, or a combination of software and hardware. For example, the method is performed by an access network device, a large device including an access network device, or a circuit system. The circuit system can implement a function of the access network device. Alternatively, the method is performed by the access network device or a network element of the access network device with assistance of an AI module independent of the access network device. This is not limited. For example, the access network device is an access network device, for example, a base station. The method includes: receiving N pieces of compressed information from a terminal device, where N is a positive integer; and processing second information by using a first decoder network, to obtain P pieces of restored information and fourth state information, where the second information is determined based on the N pieces of compressed information and eleventh state information, the eleventh state information represents downlink channel information, and P is a positive integer.

In an optional implementation, each of the P pieces of restored information corresponds to the N pieces of compressed information.

In an optional implementation, the eleventh state information is state information output by the first decoder network last time. For example, the eleventh state information in this case and the fifth state information described above may be same state information.

In an optional implementation, the method further includes: sending first signaling, where the first signaling indicates to reset state information of a first encoder network, and the first encoder network corresponds to the first decoder network.

In an optional implementation, the first signaling indicates resetting start time and/or an offset; or the first signaling indicates resetting start time and/or an offset, and indicates a resetting periodicity.

In an optional implementation, the eleventh state information is an initial value (for example, the eleventh state information in this case may be an initial value determined by the access network device in the following embodiments); or the eleventh state information is determined based on historical information of a downlink channel (for example, the eleventh state information in this case and the sixth state information described above may be same state information).

In an optional implementation, the method further includes: in one compressed information feedback periodicity, determining that no compressed information is received from the terminal device; estimating, based on historically received compressed information and/or historically obtained restored information, first compressed information corresponding to the compressed information feedback periodicity; and obtaining first restored information and eighth state information that are output by the first decoder network, where an input of the first decoder network is obtained based on seventh state information and the first compressed information, the seventh state information is state information output by the first decoder network last time, and the eighth state information is used to determine next input information of the first decoder network.

In an optional implementation, the method further includes: in one compressed information feedback periodicity, determining that no compressed information is received from the terminal device; and estimating, based on historically received compressed information and/or historically obtained restored information, restored information and ninth state information that correspond to the compressed information feedback periodicity, where the ninth state information is used to determine next input information of the first decoder network.

In an optional implementation, the method further includes: determining change information of the downlink channel based on the P pieces of restored information; and determining a first reference decoder network from a plurality of reference decoder networks based on the change information of the downlink channel, where the first reference decoder network is used to determine the first decoder network.

In an optional implementation, the method further includes: sending second signaling to the terminal device, where the second signaling indicates the change information of the downlink channel, or indicates a first reference encoder network, or indicates a reference network including the first reference encoder network, and the first reference encoder network corresponds to the first reference decoder network.

In an optional implementation, the method further includes: receiving third signaling from the terminal device, where the third signaling indicates the change information of the downlink channel, or indicates a first reference decoder network, or indicates a reference network including a first reference encoder network, and the first reference encoder network corresponds to the first reference decoder network; and determining the first reference decoder network from a plurality of reference decoder networks based on the third signaling, where the first reference decoder network is used to determine the first decoder network.

For technical effects brought by the fourth aspect or the optional implementations, refer to the descriptions of the technical effects of the second aspect or the corresponding implementations.

According to a fifth aspect, a model training method is provided, used to train an encoder network and/or a decoder network. If the method is used to train only an encoder, a decoder is not updated in the training process. If the method is used to train only a decoder, an encoder is not updated in the training process. If the method is used to train an encoder and a decoder, both the encoder and the decoder may be updated in the process. The method may be performed on a training node (for example, an AI network element, a terminal device, or an access network device) side. The method may be performed by using software, hardware, or a combination of software and hardware. This is not limited. The method includes:

operation 1: for each piece of training data in an $i^{th}$ group of training data, sequentially performing the following operations:

operation 1-1: determining M channel estimation results based on the training data, and jointly compressing the M channel estimation results by using an encoder network, to obtain N pieces of compressed information and first state information, where the first state information is used to determine next input information of the first encoder network, and N is a positive integer; and

operation 1-2: decoding the N pieces of compressed information by using a reference decoder network, to obtain P pieces of restored information and fourth state information, where the fourth state information is used to determine next input information of the first decoder network, and P is a positive integer; and

operation 2: for the $i^{th}$ group of training data, if a loss function satisfies a performance requirement, ending training, and obtaining a reference encoder and/or a reference decoder; or if a loss function does not satisfy a performance requirement, $i=i+1$, updating a reference encoder and/or a reference decoder, and performing operation 1 again.

According to a sixth aspect, a communication apparatus is provided. The communication apparatus may implement the method according to the first aspect, the third aspect, or the fifth aspect. The communication apparatus has a function of the foregoing terminal device. In an optional implementation, the apparatus may include a one-to-one corresponding module for performing the method/operation/step/action described in the first aspect, the third aspect, or the fifth aspect. The module may be implemented by a hardware circuit, software, or a hardware circuit in combination with software. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

For example, the processing unit is configured to obtain M channel estimation results, where M is a positive integer; the processing unit is further configured to jointly compress the M channel estimation results by using a first encoder network, to obtain N pieces of compressed information and first state information, where the first state information represents downlink channel information, the first state information is used to determine next input information of the first encoder network, and N is a positive integer; and the transceiver unit (or the sending unit) is configured to send the N pieces of compressed information to an access network device.

For another example, the processing unit is configured to obtain M channel estimation results, where M is a positive integer; the processing unit is further configured to process first information by using a first encoder network, to obtain N pieces of compressed information and first state information, where the first information is determined based on the M channel estimation results and tenth state information, the tenth state information represents downlink channel information, and N is a positive integer; and the transceiver unit (or the sending unit) is configured to send the N pieces of compressed information to an access network device.

For another example, the communication apparatus includes a processor, coupled to a memory, and configured to execute instructions in the memory, to implement the method in the first aspect, the third aspect, or the fifth aspect. Optionally, the communication apparatus further includes other components, for example, an antenna, an input/output module, and an interface. Such components may be hardware, software, or a combination of software and hardware.

According to a seventh aspect, a communication apparatus is provided. The communication apparatus may implement the method according to the second aspect, the fourth aspect, or the fifth aspect. The communication apparatus has a function of the foregoing access network device. The access network device is, for example, a base station or a baseband apparatus in a base station. In an optional implementation, the apparatus may include a one-to-one corresponding module for performing the method/operation/step/action described in the second aspect, the fourth aspect, or the fifth aspect. The module may be implemented by a hardware circuit, software, or a hardware circuit in combination with software. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to related descriptions in the fifth aspect.

For example, the transceiver unit (or the receiving unit) is configured to receive N pieces of compressed information from a terminal device, where N is a positive integer; and the processing unit is configured to decode the N pieces of compressed information by using a first decoder network, to obtain P pieces of restored information and fourth state information, where the fourth state information represents downlink channel information, the restored information includes information about downlink channels corresponding to the N pieces of compressed information, the fourth state information is used to determine next input information of the first decoder network, and P is a positive integer.

For another example, the transceiver unit (or the receiving unit) is configured to receive N pieces of compressed information from a terminal device, where N is a positive integer; and the processing unit is configured to process second information by using a first decoder network, to obtain P pieces of restored information and fourth state information, where the second information is determined based on the N pieces of compressed information and eleventh state information, the eleventh state information represents downlink channel information, and P is a positive integer.

For another example, the communication apparatus includes a processor, coupled to a memory, and configured to execute instructions in the memory, to implement the method in the second aspect, the fourth aspect, or the fifth aspect. Optionally, the communication apparatus further includes other components, for example, an antenna, an input/output module, and an interface. Such components may be hardware, software, or a combination of software and hardware.

According to an eighth aspect, a computer-readable storage medium is provided. The computer-readable storage medium is configured to store a computer program or instructions, and when the computer program or the instructions are run, the method in any one of the first aspect to the fifth aspect is implemented.

According to a ninth aspect, a computer program product including instructions is provided. When the computer program product runs on a computer, the method in any one of the first aspect to the fifth aspect is implemented.

According to a tenth aspect, a chip system is provided. The chip system includes a processor, may further include a memory, and is configured to implement the method in any one of the first aspect to the fifth aspect. The chip system may include a chip, or may include a chip and another discrete component.

According to an eleventh aspect, a communication system is provided, including the communication apparatus in the sixth aspect and the communication apparatus in the seventh aspect.

## BRIEF DESCRIPTION OF DRAWINGS

FIG. 1 is a diagram of a communication system;
FIG. 2 is a flowchart of a CSI feedback mechanism;
FIG. 3 is a diagram of a communication network architecture in a communication system;
FIG. 4A to FIG. 4E are diagrams of several application frameworks of AI in a communication system;
FIG. 5 is a flowchart of a first communication method;
FIG. 6A and FIG. 6B are flowcharts of two training processes;
FIG. 7A is a diagram of input information and output information of a first encoder network in a first communication method;
FIG. 7B is a diagram of input information and output information of a first decoder network in a first communication method;
FIG. 8 is a flowchart of a second communication method;
FIG. 9 is a diagram of estimating compressed information by an access network device in a second communication method;
FIG. 10 is a diagram of estimating restored information by an access network device in a second communication method;
FIG. 11 is a diagram of a processing manner used when an access network device fails to receive compressed information;
FIG. 12 is a flowchart of a third communication method;
FIG. 13 is a flowchart of a fourth communication method; and
FIG. 14 is a block diagram of a communication apparatus.

**DESCRIPTION OF EMBODIMENTS**

To make the objectives, technical solutions, and advantages of this disclosure clearer, the following further describes this disclosure in detail with reference to the accompanying drawings.

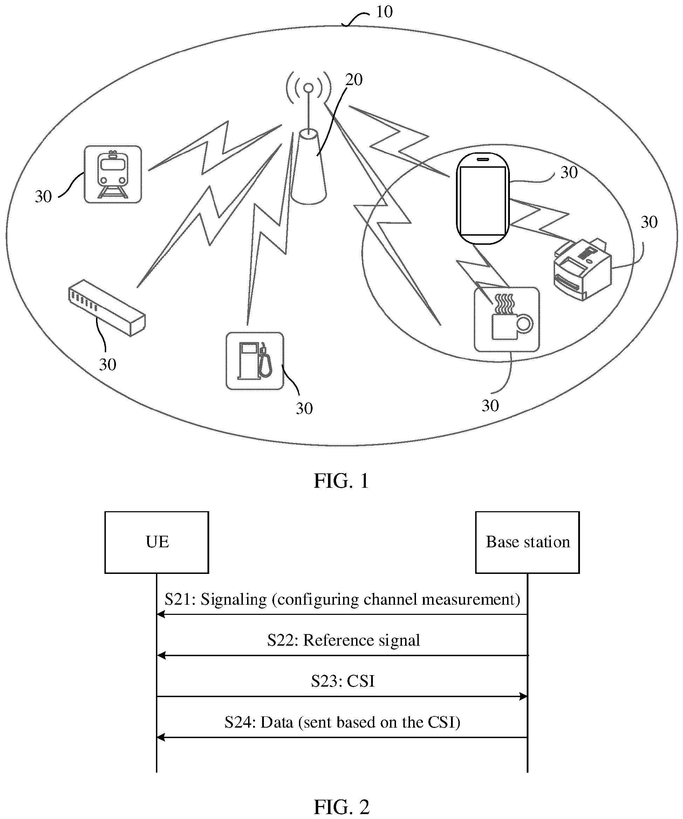

The technology provided in this disclosure may be applied to a communication system 10 shown in FIG. 1. The communication system 10 includes one or more communication apparatuses 30 (for example, a terminal device). The one or more communication apparatuses 30 are connected to one or more core network (core network, CN) devices through one or more access network (radio access network, RAN) devices 20, to implement communication between a plurality of communication devices. For example, the communication system 10 is a communication system that supports a 4th generation (the 4th generation, 4G) (including long term evolution (long term evolution, LTE)) access technology, a communication system that supports a 5G (sometimes also referred to as new radio (new radio, NR)) access technology, a wireless fidelity (wireless fidelity, Wi-Fi) system, a cellular system related to the 3rd generation partnership project (3rd generation partnership project, 3GPP), a communication system that supports convergence of a plurality of wireless technologies, a future-oriented evolved system, or the like. This is not limited.

The following separately describes in detail the terminal device and the RAN in FIG. 1.

1. Terminal device

The terminal device may be briefly referred to as a terminal. The terminal device may be a device having wireless sending and receiving functions. The terminal device may be mobile or fixed. The terminal device may be deployed on land, and include an indoor terminal device, an outdoor terminal device, a handheld terminal device, or an in-vehicle terminal device; or may be deployed on a water surface (for example, on a ship); or may be deployed in the air (for example, on an aircraft, a balloon, or a satellite). The terminal device may include a mobile phone (mobile phone), a tablet computer (pad), a computer with wireless sending and receiving functions, a virtual reality (virtual reality, VR) terminal device, an augmented reality (augmented reality, AR) terminal device, a wireless terminal device in industrial control (industrial control), a wireless terminal device in self-driving (self-driving), a wireless terminal device in telemedicine (remote medical), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, an in-vehicle device, a wearable device, a terminal device in a future 5th generation (the 5th generation, 5G) network, a terminal device in a further evolved public land mobile network (public land mobile network, PLMN), or the like. The terminal device may also be referred to as user equipment (user equipment, UE) sometimes. Optionally, the terminal device may communicate with a plurality of access network devices that use different technologies. For example, the terminal device may communicate with an access network device that supports LTE, or may communicate with an access network device that supports 5G, or may implement dual connectivity to an access network device that supports LTE and an access network device that supports 5G. This is not limited in this disclosure.

In this disclosure, an apparatus configured to implement a function of a terminal device may be a terminal device, or may be an apparatus that can support the terminal device in implementing the function, for example, a chip system, a hardware circuit, a software module, or a hardware circuit combined with a software module. The apparatus may be installed in the terminal device or may be matched with the terminal device for use. In the technical solutions provided in this disclosure, an example in which the apparatus configured to implement the function of the terminal device is a terminal device and the terminal device is UE is used to describe the technical solutions provided in this disclosure.

In this disclosure, the chip system may include a chip, or may include a chip and another discrete component.

2. RAN

The RAN may include one or more RAN devices, for example, a RAN device 20. An interface between the RAN device and a terminal device may be a Uu interface (or referred to as an air interface). In future communication, names of these interfaces may remain unchanged, or may be replaced with other names. This is not limited in this disclosure.

The RAN device is a node or a device that enables the terminal device to access a radio network. The RAN device may also be referred to as a network device or a base station. For example, the RAN device includes but is not limited to: a base station, a next generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a transmitting and receiving point (transmitting and receiving point, TRP), a transmitting point (transmitting point, TP), and/or a mobile switching center. Alternatively, the access network device may be a module configured to implement some or all functions of a base station. For example, the access network device may be at least one of a central unit (centralized unit, CU), a distributed unit (distributed unit, DU), a central unit control plane (CU control plane, CU-CP) node, a central unit user plane (CU user plane, CU-UP) node, an integrated access and backhaul (integrated access and backhaul, IAB) node, a radio controller in a cloud radio access network (cloud radio access network, CRAN) scenario, or the like. Alternatively, the access network device may be a relay station, an access point, an in-vehicle device, a terminal device, a wearable device, an access network device in a 5G network, an access network device in a future evolved public land mobile network (public land mobile network, PLMN), or the like.

In this disclosure, an apparatus configured to implement a function of an access network device may be an access network device, or may be an apparatus that can support the access network device in implementing the function, for example, a chip system, a hardware circuit, a software module, or a hardware circuit combined with a software module. The apparatus may be installed in the access network device or may be matched with the access network device for use. In the technical solutions provided in this disclosure, an example in which the apparatus configured to implement the function of the access network device is an access network device and the access network device is a base station is used to describe the technical solutions provided in this disclosure.

(1) Protocol layer structure

Communication between an access network device and a terminal device complies with a specific protocol layer structure. The protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. For example, the user plane protocol layer structure may include at least one of the following: a service data adaptation protocol (service data adaptation protocol, SDAP) layer, a PDCP layer, an RLC layer, a MAC layer, a physical layer, and the like.

The protocol layer structure between the access network device and the terminal device may be considered as an access stratum (access stratum, AS) structure. Optionally, a non-access stratum (non-access stratum, NAS) may further exist on the AS, and is used by the access network device to forward information from a core network device to the terminal device, or is used by the access network device to forward information from the terminal device to a core network device. In this case, it may be considered that there is a logical interface between the terminal device and the core network device. Optionally, the access network device may forward the information between the terminal device and the core network device through transparent transmission. For example, a NAS message may be mapped to or included in RRC signaling as an element of the RRC signaling.

Optionally, the protocol layer structure between the access network device and the terminal device may further include an artificial intelligence (artificial intelligence, AI) layer for transmitting data related to an AI function.

(2) Central unit (central unit, CU) and distributed unit (distributed unit, DU)

A RAN device may include a CU and a DU. This design may be referred to as CU and DU separation. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. Specific names of the interfaces are not limited in this disclosure. The CU and the DU may be divided based on a protocol layer of a radio network. For example, functions of a PDCP layer and a protocol layer above the PDCP layer (for example, an RRC layer and an SDAP layer) are set on the CU, and functions of a protocol layer below the PDCP layer (for example, an RLC layer, a MAC layer, and a PHY layer) are set on the DU. For another example, functions of a protocol layer above a PDCP layer are set on the CU, and functions of the PDCP layer and a protocol layer below the PDCP layer are set on the DU.

The division of the processing functions of the CU and the DU based on protocol layers is merely an example, and division may alternatively be performed in another manner. For example, the CU or the DU may be divided to have functions of more protocol layers. For another example, the CU or the DU may be alternatively divided to have some processing functions of protocol layers. In a design, some functions of the RLC layer and functions of a protocol layer above the RLC layer are set on the CU, and remaining functions of the RLC layer and functions of a protocol layer below the RLC layer are set on the DU. In another design, the functions of the CU or the DU may alternatively be divided based on service types or other system requirements. For example, division may be performed based on latencies. Functions whose processing time needs to satisfy a latency requirement are set on the DU, and functions whose processing time does not need to satisfy the latency requirement are set on the CU.

Optionally, the CU may also have one or more functions of a core network. For example, the CU may be disposed on a network side to facilitate centralized management.

Optionally, a radio unit (radio unit, RU) of the DU is disposed remotely. The RU has a radio frequency function. For example, the DU and the RU may be divided at the PHY layer. For example, the DU may implement higher-layer functions of the PHY layer, and the RU may implement lower-layer functions of the PHY layer. During sending, functions of the PHY layer may include at least one of the following: adding a cyclic redundancy check (cyclic redundancy check, CRC) bit, channel coding, rate matching, scrambling, modulation, layer mapping, precoding, resource mapping, physical antenna mapping, or a radio frequency sending function. During receiving, functions of the PHY layer may include at least one of the following: CRC check, channel decoding, rate de-matching, descrambling, demodulation, layer de-mapping, channel detection, resource de-mapping, physical antenna de-mapping, or a radio frequency receiving function. The higher-layer functions of the PHY layer may include a part of functions of the PHY layer. For example, the part of functions are closer to the MAC layer. The lower-layer functions of the PHY layer may include another part of functions of the PHY layer. For example, the part of functions are closer to a radio frequency function. For example, the higher-layer functions of the PHY layer may include adding a CRC bit, channel coding, rate matching, scrambling, modulation, and layer mapping, and the lower-layer functions of the PHY layer may include precoding, resource mapping, physical antenna mapping, and the radio frequency sending function. Alternatively, the higher-layer functions of the PHY layer may include adding a CRC bit, channel coding, rate matching, scrambling, modulation, layer mapping, and precoding, and the lower-layer functions of the PHY layer may include resource mapping, physical antenna mapping, and the radio frequency sending function. For example, the higher-layer functions of the PHY layer may include CRC check, channel decoding, rate de-matching, decoding, demodulation, and layer de-mapping, and the lower-layer functions of the PHY layer may include channel detection, resource de-mapping, physical antenna de-mapping, and the radio frequency receiving function. Alternatively, the higher-layer functions of the PHY layer may include CRC check, channel decoding, rate de-matching, decoding, demodulation, layer de-mapping, and channel detection, and the lower-layer functions of the PHY layer may include resource de-mapping, physical antenna de-mapping, and the radio frequency receiving function.

Optionally, the functions of the CU may be further divided, and a control plane and a user plane are separated and implemented by using different entities, namely, a control plane CU entity (that is, a CU-CP entity) and a user plane CU entity (that is, a CU-UP entity). The CU-CP entity and the CU-UP entity may be separately coupled to or connected to the DU, to jointly complete a function of the RAN device.

In the foregoing architecture, signaling generated by the CU may be sent to a terminal device by using the DU, or signaling generated by a terminal device may be sent to the CU by using the DU. For example, signaling at the RRC or PDCP layer may be finally processed as signaling at the physical layer and sent to the terminal device, or is converted from signaling received from the physical layer. In this architecture, the signaling at the RRC or PDCP layer may be considered to be sent by using the DU, or sent by using the DU and the RU.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this disclosure. For example, when the method in this disclosure is performed by an access network device, the method may be specifically performed by at least one of a CU, a CU-CP, a CU-UP, a DU, an RU, or a near-real-time RIC described below. The methods performed by the modules also fall within the protection scope of this disclosure.

It should be noted that, because a network device in this disclosure is mainly an access network device, in the following, unless otherwise specified, the "network device" may be an "access network device".

It should be understood that a quantity of devices in the communication system shown in FIG. 1 is merely an example, and this disclosure is not limited thereto. In actual application, the communication system may further include more terminal devices and more RAN devices, and may further include another device, for example, may include a core network device and/or a node configured to implement an artificial intelligence function.

The network architecture shown in FIG. 1 is applicable to communication systems of various radio access technologies (radio access technology, RAT), for example, a 4G communication system, a 5G (or referred to as new radio (new radio, NR)) communication system, a transition system between an LTE communication system and a 5G communication system, where the transition system may also be referred to as a 4.5G communication system, or a future communication system, for example, a 6G communication system. A network architecture and a service scenario described in this disclosure are intended to describe the technical solutions in this disclosure more clearly, and do not constitute a limitation on the technical solutions provided in this disclosure. A person of ordinary skill in the art may know that, with evolution of the communication network architecture and emergence of a new service scenario, the technical solutions provided in this disclosure are also applicable to similar technical problems.

In addition to communication between an access network device and a terminal device, the method provided in this disclosure may also be used for communication between other communication devices, for example, communication between a macro base station and a micro base station on a wireless backhaul link, or communication between a first terminal device and a second terminal device on a sidelink (sidelink, SL). This is not limited. This disclosure is described by using communication between a network device and a terminal device as an example.

When sending data to a terminal device, an access network device may perform precoding based on channel state information (channel state information, CSI) fed back by the terminal device. For ease of understanding this disclosure, the following briefly describes some technical terms in this disclosure.

1. Precoding technology

When channel state information is known, an access network device may process a to-be-sent signal by using a precoding matrix that matches a channel condition. According to the technology, a precoded to-be-sent signal can match a channel, so that quality (for example, a signal to interference plus noise ratio (signal to interference plus noise ratio, SINR)) of a signal received by a terminal device is improved, to improve a system throughput rate. According to the precoding technology, a sending device (for example, an access network device) and a plurality of receiving devices (for example, terminal devices) may effectively perform transmission on a same time-frequency resource, that is, effectively implement multi-user multiple-input multiple-output (multiple user multiple-input multiple-output, MU-MIMO). According to the precoding technology, a sending device (for example, an access network device) and a receiving device (for example, a terminal device) may effectively transmit a plurality of data streams on a same time-frequency resource, that is, effectively implement single-user multiple-input multiple-output (single-user multiple-input multiple-output, SU-MIMO). It should be noted that related descriptions of the precoding technology are merely examples for ease of understanding, and are not intended to limit a disclosure scope of this disclosure. In a specific implementation process, the sending device may alternatively perform precoding in another manner. For example, when channel information (for example, but not limited to a channel matrix) cannot be known, precoding is performed by using a preset precoding matrix or in a weighted processing manner. For brevity, specific content thereof is not described in this specification.

2. CSI feedback (CSI feedback)

The CSI feedback may also be referred to as a CSI report (CSI report). The CSI feedback means that in a wireless communication system, a receiving end (for example, a terminal device) of data (for example, but not limited to data carried on a physical downlink shared channel (physical downlink shared channel, PDSCH)) reports, to a transmitting end (for example, an access network device), information for describing a channel attribute of a communication link. The CSI report includes, for example, one or more of pieces of information such as a downlink channel matrix, a precoding matrix indicator (precoding matrix indicator, PMI), a rank indicator (rank indicator, RI), a channel quality indicator (channel quality indicator, CQI), or the like. Content included in the enumerated CSI is merely an example for description, and shall not constitute any limitation on this disclosure. The CSI may include one or more pieces of the foregoing information, or may include other information used to represent the CSI in addition to the foregoing enumerated information. This is not limited in this disclosure.

3. Neural network (neural network, NN)

The neural network is a specific implementation form of a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of data sets and a mapping relationship between data may be established, to obtain performance better than that of a conventional modeling method.

For example, a deep neural network (deep neural network, DNN) is a neural network with a large quantity of layers. Depending on different network structures and/or use scenarios, the DNN may include a multi-layer perceptron (multi-layer perceptron, MLP), a convolutional neural network (convolutional neural networks, CNN), a recurrent neural network (recurrent neural network, RNN), and the like. A specific form of the DNN is not limited in this disclosure.

4. Auto-encoder (auto-encoder, AE) network, or AE for short

The AE network may include an encoder (encoder) and a corresponding decoder (decoder). For example, the encoder and/or the decoder are/is implemented by using a neural network (for example, a DNN). In this case, the encoder may also be referred to as an encoder network, and the decoder may also be referred to as a decoder network. For example, in the AE network, the encoder and the corresponding decoder may be obtained through joint training. The encoder and the decoder that are obtained through training may be configured to encode and decode information.

In this disclosure, unless otherwise specified, a quantity of nouns represents "a singular noun or a plural noun", that is, "one or more". "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. When representing a feature, the character "/" may indicate an "or" relationship between associated objects. For example, A/B indicates A or B. When representing an operation, the symbol "/" may further represent a division operation. In addition, in this disclosure, the symbol "×" may also be replaced with the symbol "*".

The ordinal numbers such as "first" and "second" in this disclosure are used to distinguish a plurality of objects, and are not used to limit sizes, content, a sequence, a time sequence, application scenarios, priorities, importance, or the like of the plurality of objects. For example, first indication information and second indication information may be same indication information, or may be different indication information. In addition, such names do not indicate different sizes, transmission modes, indicated content, priorities, application scenarios, importance, or the like of the two pieces of indication information.

In a possible implementation, a CSI feedback mechanism uses a procedure shown in FIG. 2.

S21: A base station sends signaling, and correspondingly, UE receives the signaling from the base station.

The signaling is used to configure channel measurement information. For example, the signaling notifies the UE of at least one of the following: time information for performing channel measurement, a type of a reference signal (reference signal, RS) for performing channel measurement, a time-domain resource of the reference signal, a frequency-domain resource of the reference signal, a reporting condition of a measurement quantity, and the like.

S22: The base station sends the reference signal to the UE, and correspondingly, the UE receives the reference signal from the base station.

The UE measures the reference signal to obtain CSI.

S23: The UE sends the CSI to the base station, and correspondingly, the base station receives the CSI from the UE.

S24: The base station sends data to the UE based on the CSI, and correspondingly, the UE receives the data from the base station.

The data sent by the base station to the UE is carried on a downlink channel, for example, carried on a PDSCH.

The CSI can represent information about a downlink channel matrix. After the UE feeds back the CSI to the base station, the base station may restore downlink channel information based on the CSI, to determine information such as a precoding matrix based on the downlink channel information. Higher precision of the CSI fed back by the UE indicates that the CSI can represent more information about the downlink channel matrix and indicates more accurate downlink channel information that can be restored by the base station based on the CSI. Therefore, a more accurate precoding matrix is determined by the base station, so that downlink spatial multiplexing performance is better, a received signal to interference plus noise ratio of the UE is higher, and a system throughput rate is higher. Alternatively, after the UE feeds back the CSI to the base station, the base station may not need to restore the downlink channel information, but determine information such as a precoding matrix based on the CSI. In this case, higher precision of the CSI indicates a more accurate precoding matrix determined by the base station. However, as a scale of an antenna array in a MIMO system continuously increases, a quantity of antenna ports that can be supported also increases. Because a size of a complete downlink channel matrix is in direct proportion to the quantity of antenna ports, in a large-scale MIMO system, enormous feedback overheads are required to ensure high precision of CSI fed back by UE. Because of the enormous feedback overheads, available resources for data transmission are reduced, and therefore a system capacity is reduced. Therefore, to increase the system capacity, how to reduce the CSI feedback overheads needs to be studied.

Deep learning (deep learning, DL) is machine learning based on a deep neural network. CSI is fed back through deep learning. Compared with a conventional solution, in this method, approximately same downlink channel information may be represented with a smaller feedback amount. Therefore, CSI feedback overheads are expected to be reduced, or channel restoration precision can be improved with same overheads. In a deep learning-based CSI compression feedback technology, channel compression feedback is performed by using an AE model based on a convolutional neural network (current neural network, CNN). The AE model includes an encoder (encoder) model and a decoder (decoder) model that are matched for use. Specifically, at UE (that is, an information transmitting end), the encoder model in the AE maps a downlink channel matrix in a slot to compressed information, where the encoder model is a CNN-type neural network; and at a base station (that is, an information receiving end), the decoder model of the AE may restore the compressed information to downlink channel information, where the decoder model is a CNN-type neural network. In this manner, the base station can obtain CSI of only one slot. As a result, a downlink channel restored by the base station may be inaccurate.

In view of this, the technical solutions of this disclosure are provided. In this disclosure, in addition to compressed information, a first encoder network may further output first state information. The first state information may represent information about downlink channels corresponding to M channel estimation results, and the first state information may be further used to determine next input information of the first encoder network. This is equivalent to that when obtaining compressed information next time, in addition to referencing a downlink channel corresponding to a channel estimation result obtained next time, the first encoder network may further reference the downlink channels corresponding to the M channel estimation results by using the first state information. Downlink channels are correlated in time domain. When compressed information is obtained, in addition to a current downlink channel, a historical downlink channel is also referenced, so that the compressed information can reflect downlink channels within more time, and time domain correlation between the channels is fully utilized. This helps improve precision of a downlink channel restored by an access network device.

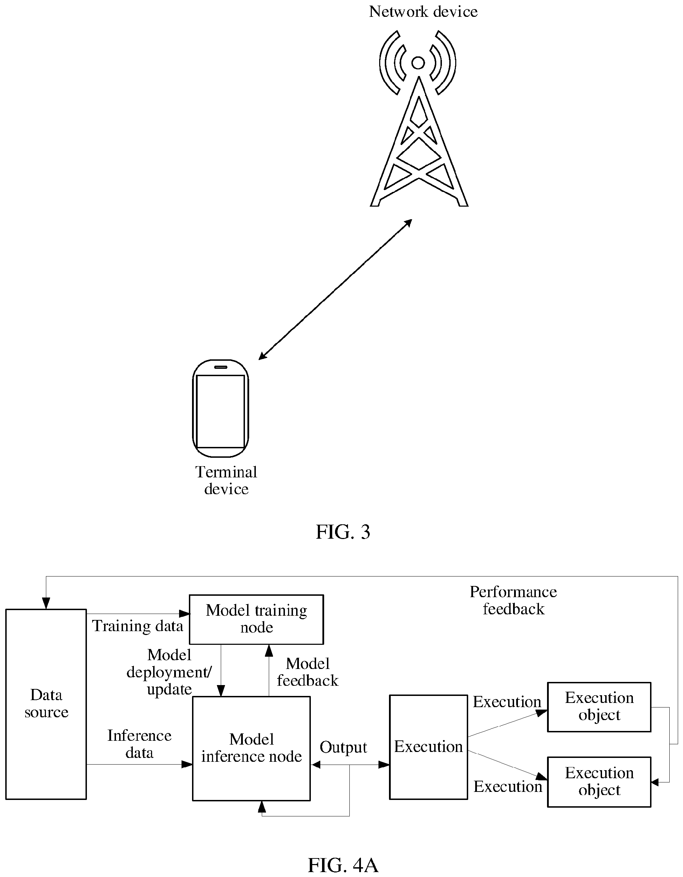

FIG. 3 shows a communication network architecture in the communication system 10 according to this disclosure. For example, method examples provided subsequently are applicable to the architecture. A network device included in FIG. 3 is, for example, the access network device 20 included in the communication system 10, and a terminal device included in FIG. 3 is, for example, the communication apparatus 30 included in the communication system 10. The network device can communicate with the terminal device.

A machine learning technology in this disclosure is a specific implementation of an artificial intelligence (artificial intelligence, AI) technology. For ease of understanding, the following describes the AI technology. It may be understood that the description is not intended to limit this disclosure.

AI is a technology that performs complex calculation by simulating a human brain. With improvement of data storage and capabilities, AI is applied more widely.

In this disclosure, an independent network element (for example, referred to as an AI network element, an AI node, or an AI device) may be introduced into the communication system shown in FIG. 1 to implement an AI function. The AI network element may be directly connected to the access network device, or may be indirectly connected to the access network device through a third-party network element. Optionally, the third-party network element may be a core network element. Alternatively, an AI entity may be configured or disposed in another network element in the communication system, to implement an AI-related operation. The AI entity may also be referred to as an AI module, an AI unit, or another name, and is mainly configured to implement some or all AI functions. A specific name of the AI entity is not limited in this disclosure. Optionally, the another network element may be an access network device, a core network device, operation, administration and maintenance (operation, administration and maintenance, OAM), or the like. In this case, the network element that performs the AI function is a network element with a built-in AI function.

In this disclosure, the AI function may include at least one of the following: data collection, model training (or model learning), model information release, model deduction (or referred to as model inference, inference, prediction, or the like), model monitoring or model verification, inference result release, or the like. The AI function may also be referred to as an AI (related) operation or an AI-related function.

In this disclosure, the OAM is configured to operate, administer, and/or maintain a core network device (OAM of the core network device), and/or is configured to operate, administer, and/or maintain an access network device (OAM of the access network device). For example, this disclosure includes first OAM and second OAM, where the first OAM is OAM of a core network device, and the second OAM is OAM of an access network device. Optionally, the first OAM and/or the second OAM include/includes an AI entity. For another example, this disclosure includes third OAM, and the third OAM is OAM of both a core network device and an access network device. Optionally, the third OAM includes an AI entity.

FIG. 4A is a diagram of a first application framework of AI in a communication system. A data source (data source) is used to store training data and inference data. A model training node (model training host) performs training or update training based on training data (training data) provided by a data source to obtain an AI model, and deploys the AI model in a model inference node (model inference host). The AI model represents a mapping relationship between an input and an output of the model. Obtaining the AI model through learning by the model training node is equivalent to obtaining the mapping relationship between the input and the output of the model through learning by the model training node by using the training data. The model inference node uses the AI model to perform inference based on inference data provided by the data source, to obtain an inference result. This method may alternatively be described as follows: A model inference node inputs inference data to an AI model, and obtains an output by using the AI model, where the output is an inference result. The inference result may indicate a configuration parameter used (executed) by an execution object, and/or an operation executed by the execution object. The inference result may be uniformly planned by an execution (actor) entity, and sent to one or more execution objects (for example, a core network element, a base station, or UE) for execution. Optionally, the model inference node may feed back the inference result of the model inference node to the model training node. This process may be referred to as model feedback. The inference result that is fed back is used by the model training node to update the AI model, and an updated AI model is deployed in the model inference node. Optionally, the execution object may feed back, to the data source, a network parameter collected by the execution object. This process may be referred to as performance feedback, and the network parameter that is fed back may be used as training data or inference data.

For example, the AI model includes a decoder network in an AE network. The decoder network (for example, a first decoder network) is deployed on an access network device side. An inference result of the decoder network is, for example, used for reconstruction of a downlink channel matrix. The AI model includes an encoder network in the AE network. The encoder network (for example, a first encoder network) is deployed on a UE side. An inference result of the encoder network is, for example, used for encoding of the downlink channel matrix.

The application framework shown in FIG. 4A may be deployed in the network element shown in FIG. 1. For example, the application framework in FIG. 4A may be deployed in at least one of the terminal device, the access network device, a core network device (not shown), or an independently deployed AI network element (not shown) in FIG. 1. For example, the AI network element (which may be considered as a model training node) may analyze or train training data (training data) provided by the terminal device and/or the access network device, to obtain a model. The at least one of the terminal device, the access network device, or the core network device (which may be considered as a model inference node) may perform inference by using the model and inference data, to obtain an output of the model. The inference data may be provided by the terminal device and/or the access network device. An input of the model includes the inference data, and an output of the model is an inference result corresponding to the model. The at least one of the terminal device, the access network device, or the core network device (which may be considered as an execution object) may perform a corresponding operation based on the inference result. The model inference node and the execution object may be the same or may be different. This is not limited.

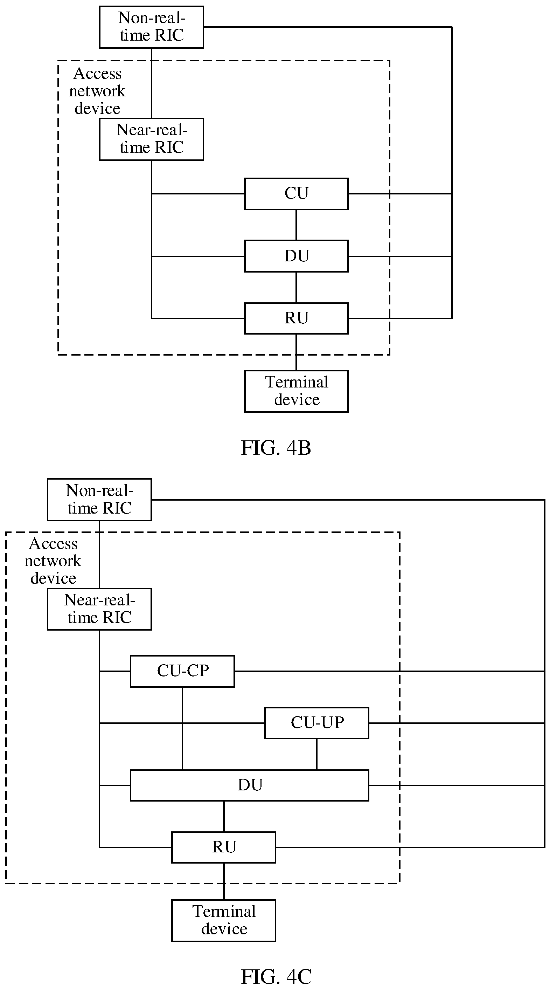

With reference to FIG. 4B to FIG. 4E, the following describes, by using an example, a network architecture to which a method provided in this disclosure can be applied.

As shown in FIG. 4B, in a first possible implementation, an access network device includes a near-real-time radio access network intelligent controller (RAN intelligent controller, RIC) module for model training and inference. For example, the near-real-time RIC may be configured to train an AI model, and use the AI model for inference. For example, the near-real-time RIC may obtain information on a network side and/or a terminal side from at least one of a CU, a DU, or an RU, and the information may be used as training data or inference data. Optionally, the near-real-time RIC may deliver an inference result to at least one of the CU, the DU, the RU, or a terminal device. Optionally, the CU and the DU may exchange the inference result. Optionally, the DU and the RU may exchange the inference result. For example, the near-real-time RIC delivers the inference result to the DU, and the DU forwards the inference result to the RU.

As shown in FIG. 4B, in a second possible implementation, there is a non-real-time RIC outside an access network (optionally, the non-real-time RIC may be located in OAM, a server, or a core network device), and is used for model training and inference. For example, the non-real-time RIC is configured to train an AI model, and use the model for inference. For example, the non-real-time RIC may obtain information on a network side and/or a terminal side from at least one of a CU, a DU, or an RU, and the information may be used as training data or inference data. An inference result may be delivered to at least one of the CU, the DU, the RU, or a terminal device. Optionally, the CU and the DU may exchange the inference result. Optionally, the DU and the RU may exchange the inference result. For example, the non-real-time RIC delivers the inference result to the DU, and the DU forwards the inference result to the RU.

As shown in FIG. 4B, in a third possible implementation, an access network device includes a near-real-time RIC, and there is a non-real-time RIC outside the access network device (optionally, the non-real-time RIC may be located in OAM, a server, or a core network device). Same as that in the foregoing second possible implementation, the non-real-time RIC may be configured to perform model training and inference. In addition/Alternatively, same as that in the foregoing first possible implementation, the near-real-time RIC may be configured to perform model training and inference. In addition/Alternatively, the non-real-time RIC performs model training, and the near-real-time RIC may obtain AI model information from the non-real-time RIC, obtain information on a network side and/or a terminal side from at least one of a CU, a DU, or an RU, and obtain an inference result by using the information and the AI model information. Optionally, the near-real-time RIC may deliver the inference result to at least one of the CU, the DU, the RU, or a terminal device. Optionally, the CU and the DU may exchange the inference result. Optionally, the DU and the RU may exchange the inference result. For example, the near-real-time RIC delivers the inference result to the DU, and the DU forwards the inference result to the RU. For example, the near-real-time RIC is configured to train a model A, and use the model A for inference. For example, the non-real-time RIC is configured to train a model B, and use the model B for inference. For example, the non-real-time RIC is configured to train a model C and send information about the model C to the near-real-time RIC, and the near-real-time RIC uses the model C for inference.

FIG. 4C is an example diagram of a network architecture to which a method provided in this disclosure can be applied. Compared with FIG. 4B, in FIG. 4B, a CU is separated into a CU-CP and a CU-UP.

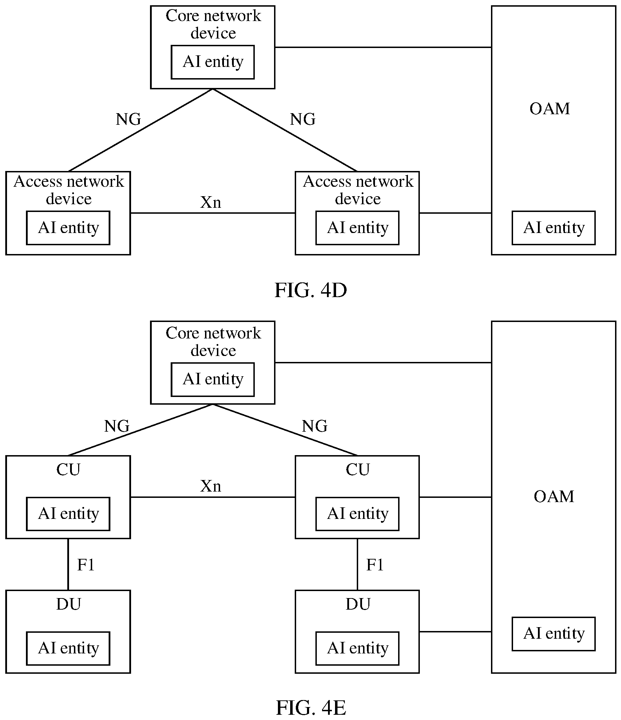

FIG. 4D is an example diagram of a network architecture to which a method provided in this disclosure can be applied. As shown in FIG. 4D, optionally, an access network device includes one or more AI entities, and a function of the AI entity is similar to that of the foregoing near-real-time RIC. Optionally, OAM includes one or more AI entities, and a function of the AI entity is similar to that of the foregoing non-real-time RIC. Optionally, a core network device includes one or more AI entities, and a function of the AI entity is similar to that of the foregoing non-real-time RIC. When the OAM and the core network device each include an AI entity, models obtained through training by AI entities of the OAM and the core network device are different, and/or models used for inference are different.

In this disclosure, the models are different in at least one of the following: a structure parameter of the model (for example, at least one of a quantity of neural network layers, a neural network width, a connection relationship between layers, a weight of a neuron, an activation function of a neuron, or an offset in an activation function), an input parameter of the model (for example, a type of the input parameter and/or a dimension of the input parameter), or an output parameter of the model (for example, a type of the output parameter and/or a dimension of the output parameter).

FIG. 4E is an example diagram of a network architecture to which a method provided in this disclosure can be applied. Compared with FIG. 4D, in FIG. 4E, an access network device is separated into a CU and a DU. Optionally, the CU may include an AI entity, and a function of the AI entity is similar to that of the foregoing near-real-time RIC. Optionally, the DU may include an AI entity, and a function of the AI entity is similar to that of the foregoing near-real-time RIC. When the CU and the DU each include an AI entity, models obtained through training by AI entities of the CU and the DU are different, and/or models used for inference are different. Optionally, the CU in FIG. 4E may be further separated into a CU-CP and a CU-UP. Optionally, one or more AI models may be deployed in the CU-CP. Optionally, one or more AI models may be deployed in the CU-UP.

In FIG. 4D or FIG. 4E, OAM of the access network device and OAM of the core network device are uniformly deployed. Alternatively, as described above, in FIG. 4D or FIG. 4E, OAM of the access network device and OAM of the core network device may be separately deployed.

In this disclosure, one model may obtain one or more outputs through inference, and each output includes one or more parameters. Learning processes or training processes of different models may be deployed in different devices or nodes, or may be deployed in a same device or node. Inference processes of different models may be deployed in different devices or nodes, or may be deployed in a same device or node.

Optionally, the AI model includes a decoder network in an AE network. On a network side, an inference result of the decoder network (for example, a first decoder network) is, for example, used for reconstruction of a downlink channel matrix. Optionally, the AI model includes an encoder network in the AE network, and model information of the encoder network (for example, a first encoder network) may be sent to UE for the UE to perform inference.

It should be noted that, in the frameworks in FIG. 4A to FIG. 4D, the AI model may be referred to as a model, a network model, or the like for short, and may be considered as mapping from an input parameter (for example, an input matrix) to an output parameter (for example, an output matrix). For example, for the decoder network (for example, the first decoder network) on the network side, the input matrix may be a matrix determined based on received CSI. Training data may include a known input matrix, or include a known input matrix and a corresponding output matrix, and is used to train an AI model. The training data may be data from an access network device, a CU, a CU-CP, a CU-UP, a DU, an RU, UE, and/or another entity, and/or data obtained through inference by using an AI technology. This is not limited. Inference data includes an input matrix, and is used to infer an output matrix by using a model. The inference data may be data from an access network device, a CU, a CU-CP, a CU-UP, a DU, an RU, UE, and/or another entity. The inferred matrix may be considered as policy information, and is sent to an execution object. The inferred matrix may be sent to an access network device, a CU, a CU-CP, a CU-UP, a DU, an RU, UE, or the like for further processing, for example, for reconstruction of a downlink channel matrix.

In this disclosure, on the network side, the decoder network (for example, the first decoder network) in the AE network may be deployed in an access network device (for example, a base station) or outside an access network device, for example, deployed in OAM, an AI network element, a core network device, an RU, a DU, or a near-real-time RIC. This is not limited. The inference result of the decoder network may be obtained through inference by the access network device, or may be sent to the access network device after being inferred by the non-real-time RIC. For brevity of description, this disclosure is described by using an example in which a decoder network is deployed in an access network device.

In this disclosure, an encoder network (for example, a first encoder network) in an AE network is deployed in UE, and the UE may perform inference by using the encoder network.

The following describes methods provided in this disclosure with reference to the accompanying drawings. Steps or operations included in the methods are merely examples, and other operations or variations of various operations may be alternatively performed in this disclosure. In addition, the steps may be performed in a sequence different from that presented in this disclosure, and not all the operations may be performed.

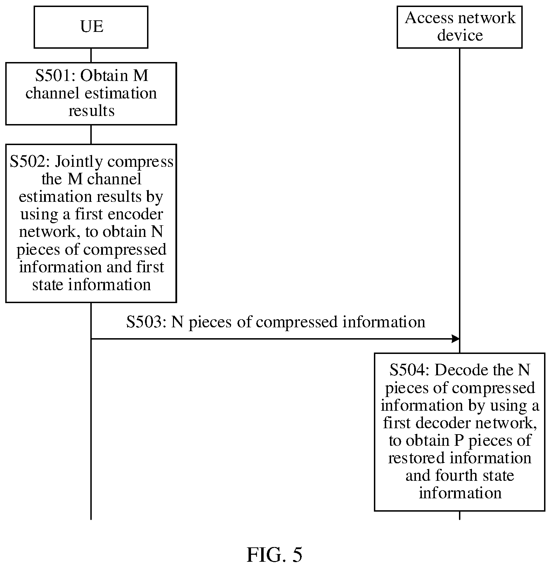

FIG. 5 is a flowchart of a communication method according to this disclosure.

S501: UE obtains M channel estimation results, where M is a positive integer.

For example, the M channel estimation results can reflect features of downlink channels within one or more time units. For example, the time unit is a subframe (subframe), a slot (slot), a mini-slot (mini-slot), or an orthogonal frequency division multiplexing (orthogonal frequency division multiplexing, OFDM) symbol (symbol). In this disclosure, an example in which the time unit is a slot is used. Therefore, the "slot" is used for description in the following embodiments. In other words, the "slot" below may be replaced with the "time unit".

For example, some or all of the M channel estimation results are channel estimation results obtained by the UE through measurement based on a received downlink reference signal. For example, an access network device may send a downlink reference signal to the UE, and the UE may receive the downlink reference signal. Then, the UE may measure the received downlink reference signal to obtain a channel estimation result. For example, the UE may obtain one channel estimation result by measuring one downlink reference signal. In this case, the UE may obtain a plurality of channel estimation results by measuring a plurality of downlink reference signals. The M channel estimation results may be obtained by measuring M downlink reference signals. The downlink reference signal is, for example, a synchronization signal and physical broadcast channel block (synchronization signal and physical broadcast channel (PBCH) block, SSB) or a channel state information reference signal (channel state information reference signal, CSI-RS). This is not limited.

Optionally, an implementation in which the UE performs measurement based on a received downlink reference signal to obtain a channel estimation result is as follows: The UE obtains the channel estimation result based on a received signal and a reference signal. The received signal is the downlink reference signal received by the UE, and the reference signal is a downlink reference signal sent by the access network device. This is equivalent to that the UE obtains the channel estimation result based on the received signal and the downlink reference signal sent by the access network device. For example, the UE may prestore a downlink reference signal that may be sent by the access network device. After receiving a downlink signal from the access network device, the UE may perform a cross-correlation operation by using the prestored signal and the received downlink signal, to determine which type of downlink reference signal the received downlink signal is. In this manner, it is equivalent to that the UE knows both the received signal and the reference signal. For example, the downlink reference signal sent by the access network device is agreed on in a protocol.

For example, a least square estimation algorithm may be used. For example, a downlink channel matrix is represented by using an $(N_t, N_r)$-dimensional complex matrix H, and the downlink reference signal (in other words, a downlink reference signal matrix) sent by the access network device is represented by using an (L, At)-dimensional complex matrix X. In this case, a received signal Y on a UE side may be represented as Y=XH+N. N represents additive complex noise, $N_t$ represents a quantity of transmit antenna ports of the access network device, $N_r$ represents a quantity of receive antenna ports on the UE side, and L represents a quantity of downlink reference signals. For example, L=M. According to the least square estimation algorithm, H estimated based on the received signal Y and the reference signal X may satisfy: $\tilde{H} = X^{-1}Y$. For example, the M channel estimation results may be represented by H.

Alternatively, Hs on $N_{sub}$ subbands may be concatenated to obtain an $(N_t, N_r, N_{sub})$-dimensional downlink channel tensor, and the downlink channel tensor is considered as a result obtained by processing the M channel estimation results. Alternatively, another channel preprocessing operation may be performed on the $(N_t, N_r, N_{sub})$-dimensional downlink channel tensor to obtain a channel tensor of a new dimension. The channel tensor of the new dimension may be considered as a result obtained by processing the M channel estimation results or the like. Details are not described again.

S502: The UE jointly compresses the M channel estimation results by using a first encoder network, to obtain N pieces of compressed information and first state information, where N is a positive integer.

In this disclosure, the UE may jointly compress the M channel estimation results by using the first encoder network. Therefore, the UE needs to first determine the first encoder network.

In this disclosure, performing compression by using an encoder network may also be described as performing encoding by using an encoder network or the like. This is not limited.

In a technology in which CSI feedback is performed with reference to a neural network, a typical neural network architecture is a dual architecture. An auto-encoder is used as an example. Compressed transmission may be implemented through joint optimization of an encoder and a decoder. For example, one or more groups of (or referred to as one or more) reference networks may be obtained through training, and the reference networks may be encoder networks (which may also be briefly referred to as reference encoder networks)-decoder networks (which may also be briefly referred to as reference decoder networks) that appear in pairs. In other words, one group of reference networks may include one reference encoder network and one corresponding reference decoder network. It is assumed that there are P groups of reference networks, and the P groups of reference networks may be trained offline or online. Alternatively, P1 groups of reference networks are trained offline, and the other P-P1 groups of reference networks are trained online. This is not limited. P is a positive integer, and P1 is a positive integer less than or equal to P.

For offline training, there may be an agreement in a protocol. For example, the protocol may provide parameters such as network structures and/or weights of one or more groups of reference networks (including a reference encoder network and a reference decoder network). The UE or the access network device may implement these reference networks according to the protocol. Optionally, the protocol may provide evaluation performance corresponding to these specific reference networks in an agreed data set.

Alternatively, one or more groups of reference networks may be obtained through online training. A training method may include the following several operation processes: Operation 1: A training node determines a group of training data in a training data set; and performs encoding and decoding operations on each piece of training data in the group of training data, to obtain an output of a trained model (for example, including a reference encoder network and/or a reference decoder network). Operation 2: For the group of training data, if a loss function satisfies a performance requirement, end training; or if a loss function does not satisfy a performance requirement, update a current model, and perform operation 1 again. When operation 1 is performed again, a group of used training data may be a group of training data used to perform operation 1 last time, or may be a different group of training data. This is not limited.

Operation 1 may occur before training. In operation 1, the training node may obtain one or more pieces of downlink channel information within a historical period of time. The one or more pieces of downlink channel information may form the training data set. In this disclosure, one or more groups of training data included in the training data set may be used to train a reference network. In this disclosure, one group of training data may include one or more pieces of training data, for example, include some or all data in the training data set. If the training data set includes a plurality of groups of training data, different groups of training data may include a same quantity of pieces of training data, or may include different quantities of pieces of training data. In addition, different groups of training data may have an intersection set, or may not have an intersection set. This is not limited. The one or more pieces of downlink channel information may be stored by the training node, or transmitted by a data node to the training node. Each piece of training data may include downlink channel information obtained for T consecutive times within the period of time, the downlink channel information obtained for T consecutive times may be obtained by the UE by measuring a downlink reference signal for T consecutive times, and T is a positive integer. For example, downlink channel information obtained each time in the downlink channel information obtained by the UE for T consecutive times may include M channel estimation results and P ideal restoration results. The training node needs to determine an input dimension of the reference encoder network, a dimension of output compressed information, and a dimension of output state information. In addition, the training node needs to determine an input dimension of the reference decoder network, a dimension of output restored information, and a dimension of output state information.

In an iterative training process, a to-be-trained reference encoder network and a to-be-trained reference decoder network are respectively a preset reference encoder network and a preset reference decoder network, or an updated reference encoder network and an updated reference decoder network that are obtained after a previous iterative training process is completed.

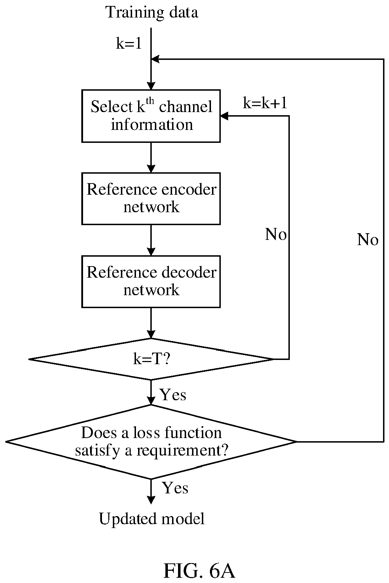

In the iterative training process, the training node determines a group of training data from the training data set. For details, refer to the foregoing description. In operation 1, for an operation performed by the training node for each piece of training data in a group of training data, refer to FIG. 6A.

Step A: The training node inputs M channel estimation results in $1^{st}$ downlink channel information included in the training data into the to-be-trained reference encoder network, to obtain compressed information and state information 1 that are output by the reference encoder network. The compressed information and the state information 1 are input into the to-be-trained reference decoder network. Then, the reference decoder network decodes the compressed information and outputs P pieces of restored information, and the reference decoder network further outputs state information 2. The training node calculates correlation between the P pieces of restored information output by the reference decoder network this time and P ideal restoration results, where the correlation is denoted as $R_1$. $i^{th}$ downlink channel information included in the training data is downlink channel information obtained for the $i^{th}$ time in T consecutive times, and $1 \leq i \leq T$.

Step B: The training node inputs M channel estimation results in $L^{th}$ (L> 1) downlink channel information included in the training data and state information output by the reference encoder network last time into the reference encoder network, to obtain compressed information and state information that are output by the reference encoder network. The compressed information and state information output by the reference decoder network last time are input into the reference decoder network, and the reference decoder network may output P pieces of restored information and output state information. The training node calculates correlation between the P pieces of restored information output by the reference decoder network this time and P ideal restoration results, where the correlation is denoted as $R_L$. A value of L is increased by 1.

Step C: Repeat step B T-1 times.

Step D: For the training data, the training node calculates a loss function, for example, $\Sigma_i R_i$.

Operation 2 may be performed after each piece of training data in the group of training data is used for training according to the foregoing process. In operation 2, if an average value of loss functions of all training data included in the group of training data (or a value obtained through calculation according to another method by using loss functions of all training data) is less than or equal to a threshold A, or a loss function of each piece of training data included in the group of training data is less than or equal to a threshold A, it is considered that a reference encoder network and a reference decoder network that are obtained after training based on the group of training data is completed form a trained reference network, and a model training process ends. If an average value of loss functions of all training data included in the group of training data is not less than or equal to a threshold A, or a loss function of each piece of training data included in the group of training data is not less than or equal to a threshold A, a parameter of the reference encoder network and/or a parameter of the reference decoder network are/is updated, for example, a parameter of a model is updated by using a gradient descent method, and then the foregoing training process is performed again by using an updated reference encoder network and/or an updated reference decoder network and another group of training data included in the training data set.

If the UE is a training node, and the UE has trained a reference encoder network based on the foregoing steps, the UE uses an updated reference encoder network to perform a subsequent encoding operation. Optionally, if the UE also trains a reference decoder network based on the foregoing steps, the UE sends information about a reference decoder network obtained through training to the access network device. Alternatively, if the access network device is a training node, and the access network device has trained a reference decoder network based on the foregoing steps, the access network device uses an updated reference decoder network to perform a subsequent decoding operation. Optionally, if the access network device further trains a reference encoder network based on the foregoing steps, the access network device may send information about an updated reference encoder network to the UE. Alternatively, if a third-party node (for example, an AI network element) is a training node, the third-party node may send information about a reference encoder network obtained through training to the UE, and send information about a reference decoder network obtained through training to the access network device, or send both information about a reference encoder network obtained through training and information about a reference decoder network obtained through training to the access network device, and then the access network device sends the information about the reference encoder network to the UE. Alternatively, the access network device and the UE perform joint training, where a reference encoder is trained on a UE side, and a reference decoder is trained on a base station side.

In this disclosure, the model training process is similar to an application model inference process, and a main difference lies in: (1) P ideal restoration results known in the training process are used to calculate a loss function, and the inference process is used to infer the P restoration results. (2) The reference encoder and/or the reference decoder can be updated in the training process, and the reference encoder and the reference decoder cannot be updated in the inference process. If there is a group of reference networks, the UE uses the group of reference networks. In this disclosure, after determining the reference encoder network, the UE may directly use the determined reference encoder network. In other words, the reference encoder network is the first encoder network finally used by the UE. Alternatively, after determining the reference encoder network, the UE does not directly use the reference encoder network, but a feature of an encoder network finally used by the UE may be determined based on a feature of the reference encoder network. For example, an input dimension of the first encoder network used by the UE may be determined based on an input dimension of the reference encoder network. For example, the input dimension of the first encoder network used by the UE is equal to the input dimension of the reference encoder network. Similarly, for example, an output dimension of the first encoder network used by the UE may also be determined based on an output dimension of the reference encoder network. For example, the output dimension of the first encoder network used by the UE is equal to the output dimension of the reference encoder network. For example, when an input of the first encoder network used by the UE is the same as an input of the reference encoder network, a difference between an output of the first encoder network used by the UE and an output of the reference encoder network is less than or less than or equal to a threshold. For another example, when an input of the first encoder network used by the UE is the same as an input of the reference encoder network, a difference between a first output and a second output is less than or less than or equal to a threshold. The first output is an output of a reference decoder network corresponding to the reference encoder network when the first encoder network and the reference decoder network are jointly used, and the second output is an output of the reference decoder network when the reference encoder network and the reference decoder network are jointly used. It may be understood that the first encoder network is obtained based on the reference encoder network and/or the reference decoder network (for example, through training), and the first encoder network and the reference encoder network have a same function. Optionally, the UE uses the reference encoder network as an initial encoder network, and obtains the first encoder network through training by using the foregoing training process. In the training process, the reference decoder network is not updated. For example, the foregoing reference encoder network for obtaining the first encoder network is referred to as a first reference encoder network.

Similar for the access network device, the first decoder network may also be obtained based on the reference encoder network and/or the reference decoder network, and the first decoder network and the reference decoder network have a same function. For a specific implementation, refer to the implementation of the UE in the foregoing paragraph. Optionally, after the reference decoder network is determined, the access network device may determine the reference decoder network as the first decoder network; or a feature of the first decoder network finally used by the access network device may be determined based on a feature of the reference decoder network. For example, an input dimension of the first decoder network used by the access network device may be determined based on an input dimension of the reference decoder network. For example, the input dimension of the first decoder network used by the access network device is equal to the input dimension of the reference decoder network. Similarly, for example, an output dimension of the first decoder network used by the access network device may also be determined based on an output dimension of the reference decoder network. For example, the output dimension of the first decoder network used by the access network device is equal to the output dimension of the reference decoder network. For example, when an input of the first decoder network used by the access network device is the same as an input of the reference decoder network, a difference between an output of the first decoder network and an output of the reference decoder network is less than or less than or equal to a threshold. For another example, when same data is input into the reference encoder network, a difference between a third output and a fourth output is less than or less than or equal to a threshold. The third output is an output of the first decoder network when the reference encoder network and the first decoder network are jointly used, and the fourth output is an output of the reference decoder network corresponding to the first decoder network when the reference encoder network and the reference decoder network are jointly used. Optionally, the access network device uses the reference decoder network as an initial decoder network, and obtains the first decoder network through training by using the foregoing training process. In the training process, the reference encoder network is not updated. The reference decoder network determined by the access network device and the reference encoder network determined by the UE correspond to each other, and belong to a same reference network. In this way, the first encoder network can correspond to the first decoder network. For example, the foregoing reference decoder network for obtaining the first decoder network is referred to as a first reference decoder network.

If there are a plurality of groups of reference networks, the access network device may indicate the UE to use a specific group of reference networks or a reference encoder network in a specific group of reference networks. For example, the access network device sends first indication information to the UE, where the first indication information may indicate the first reference encoder network. An indication manner in which the first indication information indicates the first reference encoder network is that the first indication information indicates or includes parameter information of the first reference encoder network. The parameter information of the first reference encoder network includes, for example, parameters such as a structure and/or a weight of the first reference encoder network. The UE may determine the corresponding first reference encoder network based on the parameter information of the first reference encoder network. Alternatively, the first indication information may indicate or include an index of the first reference encoder network, or indicate or include an index of a reference network to which the first reference encoder network belongs. The UE can also determine the corresponding first reference encoder network based on the first indication information. After the first reference encoder network is determined, for how the UE determines the first encoder network, refer to the foregoing description.

Alternatively, the UE may autonomously select a specific group of reference networks or a reference encoder network in a specific group of reference networks that is to be used by the UE. For example, the UE may select one of a plurality of groups of reference networks based on factors such as evaluation performance of the reference networks. For example, the reference networks include the first reference encoder network. After the first reference encoder network is determined, for how the UE determines the first encoder network, refer to the foregoing description. If the UE autonomously determines the first reference encoder network, the UE may send second indication information to the access network device. The second indication information may indicate the first reference encoder network selected by the UE. If the first encoder network finally used by the UE and the first reference encoder network are not a same network, the second indication information may indicate or include parameter information of the first reference encoder network, and the access network device may determine, based on the parameter information of the first reference encoder network, a reference network to which the first reference encoder network belongs, so as to determine the first reference decoder network included in the reference network. Alternatively, the second indication information may indicate or include parameter information of the reference network selected by the UE, and the access network device may determine, based on the parameter information of the reference network, the first reference decoder network included in the reference network. Alternatively, the second indication information may indicate or include an index of the first reference encoder network selected by the UE. If the first encoder network finally used by the UE and the first reference encoder network are not a same network, the second indication information may indicate or include the index of the first reference encoder network, or indicate or include an index of the reference network, so that the access network device can determine the corresponding first reference decoder network. An indication manner in which the second indication information indicates parameter information of a network is that the second indication information includes the parameter information of the network. For example, if the second indication information indicates parameter information of the first reference encoder network, the second indication information may include the parameter information of the first reference encoder network, for example, include parameters such as a structure and/or a weight of the first reference encoder network. An indication manner in which the second indication information indicates an index of a network is that the second indication information includes the index of the network. For example, if the second indication information indicates an index of the first reference encoder network, the second indication information may include the index of the first reference encoder network.

Regardless of whether the access network device sends the first indication information to the UE or the UE sends the second indication information to the access network device, if the parameter information of the first reference encoder network (or the reference network) is sent, to reduce transmission overheads, optionally, a transmitting end (the access network device or the UE) may compress the parameter information of the first reference encoder network (or the reference network), and the first indication information or the second indication information may include compressed parameter information. A compression manner includes but is not limited to one or more of model pruning, model distillation, model quantization, or the like. Model pruning means that some parameter information of the first reference encoder network (or the reference network) is sent to the UE, and remaining parameter information is not sent. The UE obtains the some parameter information of the first reference encoder network (or the reference network), instead of obtaining all parameter information. This is equivalent to pruning some parameters, to reduce transmission overheads. Model distillation refers to obtaining a first model based on the parameter information of the first reference encoder network (or the reference network). A scale of the first model is less than a scale of the first reference encoder network (or the reference network). It may be understood that the first reference encoder network (or the reference network) is a model with a relatively large scale, and a quantity of parameters corresponding to the first reference encoder network (or the reference network) may be relatively large, but the first model is a model with a relatively small scale, and a quantity of parameters corresponding to the first model may be relatively small. In this case, the first indication information or the second indication information may include the first model (or include parameter information of the first model). In this way, transmission overheads can also be reduced. After receiving the first model, a receiving end (the UE or the access network device) may determine the first decoder network based on the first model. It may be understood that the receiving end applies the first model as the first reference encoder network (or the reference network). Model quantization means that if the parameter information of the first reference encoder network (or the reference network) is, for example, a floating point number, the transmitting end may quantize the parameter information of the first reference encoder network (or the reference network), and the parameter information of the first reference encoder network (or the reference network) included in the first indication information or the second indication information may be a quantized parameter. This can also reduce transmission overheads.

If the UE determines the first encoder network, an implementation in which the UE jointly compresses the M channel estimation results is that the UE inputs first information into the first encoder network, and the first encoder network may jointly compress the first information. The first information is input information of the first encoder network. Optionally, the first information may be determined based on the M channel estimation results. After joint compression, the first encoder network may output the N pieces of compressed information. Because the N pieces of compressed information are obtained by jointly compressing the first information, and the first information is determined based on the M channel estimation results, each of the N pieces of compressed information corresponds to some or all of the M channel estimation results. Channel estimation results corresponding to different compressed information may be the same, or may be different, or may not be completely the same. Different compressed information may correspond to a same parameter of a same channel estimation result, or different compressed information may correspond to different parameters of a same channel estimation result, or different compressed information may correspond to not completely the same parameters of a same channel estimation result. That one piece of compressed information corresponds to one channel estimation result may be understood as that the compressed information reflects a feature of the channel estimation result, or a process of generating the compressed information is related to the channel estimation result, or the compressed information corresponds to all or some parameters of the channel estimation result.

In addition, a value relationship between M and N is not limited. For example, M may be greater than N, equal to N, or less than N. An objective of jointly compressing the first information by the first encoder network is as follows: An information amount of the first information is greater than an information amount of the N pieces of compressed information, or a quantity of bits required for sending the first information is greater than a quantity of bits required for sending the N pieces of compressed information (or it is understood that an information amount of the M channel estimation results is greater than the information amount of the N pieces of compressed information, or a quantity of bits required for sending the M channel estimation results is greater than the quantity of bits required for sending the N pieces of compressed information). Therefore, signaling overheads can be reduced through compression of the first encoder network.

The first information input by the UE into the first encoder network may include the M channel estimation results, or include a processing result obtained by performing corresponding processing on the M channel estimation results. For a processing manner, refer to the description of S501.

In this disclosure, in addition to outputting the N pieces of compressed information, the first encoder network may further output the first state information. The first state information may represent downlink channel information. Because the first state information is also output when the first information is used as input information, the downlink channel information represented by the first state information may include information about downlink channels corresponding to the M channel estimation results. The "state information" is merely an optional name, and for example, may also be referred to as "channel information", "network state information", "historical channel information", or "model state information". The name is not limited.

The first state information may be used to determine next input information of the first encoder network, and next application of the first encoder network means that the UE obtains compressed information by using the first encoder network next time. In a next input process, information determined based on a channel estimation result obtained next time (where a quantity of channel estimation results obtained by the UE each time (or channel estimation results input into the first encoder network each time) may be one or more) may be input into the first encoder network, and information determined based on the first state information may be further input into the first encoder network. Therefore, the first encoder network may mine correlation between downlink channels at a plurality of times by comprehensively using a downlink channel corresponding to a next channel estimation result and the downlink channels corresponding to the M current channel estimation results, and obtain, based on the time domain correlation, compressed information to be output next time. In this disclosure, correlation between channels in time domain is considered, so that a downlink channel can be accurately represented each time the UE outputs a small amount of compressed information, thereby reducing feedback overheads of the compressed information, and improving accuracy of restoring the downlink channel by the access network device.

If network state resetting is not performed before S502 (the concept of network state resetting is described below), for example, if a state of the first encoder network is not reset between S502 and obtaining compressed information by the UE by using the first encoder network last time, and if the UE does not obtain compressed information by using the first encoder network for the first time in S502 (that is, the UE has obtained compressed information at least once by using the first encoder network), in addition to the M channel estimation results, second state information may be further considered when the first information is determined, that is, the UE may determine the first information based on the M channel estimation results and the second state information. For example, the second state information is state information output by the first encoder network last time. In this case, the second state information may represent information about a downlink channel corresponding to a channel estimation result input into the first encoder network last time. Therefore, the first state information output by the first encoder network may further reflect the information about the downlink channel corresponding to the second state information in addition to the information about the downlink channels corresponding to the M channel estimation results. It may be understood that the UE continuously obtains compressed information and continuously updates state information of the first encoder network. For example, the UE periodically obtains compressed information. Alternatively, although the UE does not periodically obtain compressed information, the UE may obtain compressed information at intervals.

For example, the UE obtains the M channel estimation results in a process of obtaining compressed information for the $n^{th}$ time (in other words, an $n^{th}$ encoding process), and the UE may determine the first information based on the M channel estimation results and the second state information, and input the first information into the first encoder network. The first encoder network may output the N pieces of compressed information, and may further output the first state information. The second state information is state information output by the first encoder network in an $(n-1)^{th}$ encoding process of the UE. Then, in an $(n+1)^{th}$ encoding process, the UE may obtain at least one channel estimation result, and the UE may determine corresponding information based on the at least one channel estimation result and the first state information (that is, the first state information output in the $n^{th}$ encoding process), and input the information into the first encoder network. The first encoder network may output corresponding compressed information and state information, and so on. It can be learned that, in an encoding process, the UE may determine current input information of the first encoder network based on state information output by the first encoder network last time, and the state information output by the first encoder network last time can reflect a downlink channel within historical time. In this way, the first encoder network can effectively mine time domain correlation between channels. For example, because the first encoder network may obtain compressed information by comprehensively using historical downlink channel information and current downlink channel information, an information amount of current compressed information can be reduced by using the time domain correlation between the channels, to reduce transmission overheads of the compressed information.

The first information is determined based on the M channel estimation results and the second state information. For example, in an implementation, the first information includes the M channel estimation results and the second state information. Alternatively, in another implementation, the first information includes information obtained by performing corresponding processing on the M channel estimation results (for a processing manner, refer to the description of S501), and includes information obtained by performing corresponding processing on the second state information. Alternatively, in another implementation, the first information includes information obtained by performing joint processing on the M channel estimation results and the second state information. For example, a manner in which the UE processes the M channel estimation results is that the UE multiplies each channel estimation result in the M channel estimation results by a complex number, so that an imaginary part of a first element in each channel estimation result is zero. For another example, a manner in which the UE processes the second state information is normalizing the second state information, that is, determining a maximum value in elements included in the second state information, and dividing all elements included in the second state information by the maximum value, to obtain a normalization result. For another example, an implementation in which the UE performs joint processing on the M channel estimation results and the second state information is normalizing the M channel estimation results and the second state information, that is, determining a maximum value in elements included in the M channel estimation results and the second state information, and dividing all elements included in the M channel estimation results and the second state information by the maximum value, to obtain a normalization result of the M channel estimation results and the second state information.

In this disclosure, information determined based on state information output by the first encoder network last time may be used as an additional input of the first encoder network this time, to reduce feedback overheads of compressed information and improve restoration precision for a downlink channel. When there is higher correlation between historical information of a downlink channel contained in the state information output by the first encoder network last time and downlink channel information reflected by a current channel estimation result, feedback precision is higher. For example, when a time-varying characteristic of the downlink channel is obvious, the historical information of the downlink channel contained in the state information output by the first encoder network last time may differ greatly from the downlink channel information reflected by the current channel estimation result. In this case, if the state information output by the first encoder network last time is used as an additional input of the first encoder network this time, a brought performance gain is limited. Therefore, optionally, a network state resetting process is introduced in this disclosure. Impact of the time-varying characteristic of the channel on channel compression and restoration processes can be reduced through network state resetting. For example, the network state resetting includes resetting a state of the first encoder network, and/or includes resetting a state of the first decoder network. Optionally, in a network state resetting process, it is better to synchronously reset the state of the first encoder network and the state of the first decoder network, so that the states on the two sides can correspond to each other. Resetting the state of the first encoder network includes, for example, resetting state information input into the first encoder network, or resetting input information of the first encoder network. Resetting the state of the first decoder network includes, for example, resetting state information input into the first decoder network, or resetting input information of the first decoder network. The following first describes a process of resetting the state of the first encoder network. Resetting the state of the first decoder network is described below.

Optionally, a first manner in which the UE resets the state of the first encoder network is that the UE resets the state information input into the first encoder network to an initial value. Optionally, the initial value is 0. The initial value may have no actual meaning. For example, the initial value does not represent downlink channel information. Therefore, the initial value may not need to be input into the first encoder network. This may be understood as that the input information of the first encoder network may be irrelevant to the initial value. This network state resetting manner is relatively simple, and helps simplify implementation of the UE and the access network device.

Alternatively, a second manner in which the UE resets the state of the first encoder network is that the UE obtains third state information based on historical downlink channel information, and uses the third state information as new to-be-input state information of the first encoder network. This may be understood as that the input information of the first encoder network may be determined based on the third state information.

Optionally, the UE may obtain the third state information based on one or more channel estimation results, and the one or more channel estimation results are channel estimation results historically obtained by the UE. In this case, it is equivalent to that the third state information is determined based on historical information of a downlink channel (or a historical time domain downlink channel or a historical downlink channel), and the third state information may represent a historical time domain status of the downlink channel, or represent the historical downlink channel. The historically obtained channel estimation result has been obtained by the UE, and may be locally stored in the UE. The UE needs only to obtain stored information, and does not need to consume much time. Therefore, efficiency is relatively high.

Which channel estimation results are to be used by the UE to obtain the third state information may be determined by the UE, or indicated by the access network device. Optionally, the access network device may indicate one or more of the following to indicate the channel estimation results to be used by the UE: time corresponding to a first channel estimation result (a channel estimation result corresponding to earliest time in a plurality of channel estimation results is the first channel estimation result in the plurality of channel estimation results) that the UE should use, time corresponding to a last channel estimation result (a channel estimation result corresponding to latest time in the plurality of channel estimation results is the last channel estimation result in the plurality of channel estimation results) that the UE should use, a quantity of the one or more channel estimation results, a time interval between two adjacent channel estimation results in the one or more channel estimation results, or time corresponding to each of the one or more channel estimation results. Time corresponding to a channel estimation result is, for example, time at which the UE obtains the channel estimation result through measurement, or time of a downlink channel corresponding to the channel estimation result. For example, the one or more channel results are channel estimation results obtained by the UE in recent time.

For example, if the access network device indicates the time corresponding to the first channel estimation result, the UE may determine the first channel estimation result, and the UE may determine to use the first channel estimation result to an $a^{th}$ channel estimation result as the one or more channel estimation results. The $a^{th}$ channel estimation result is the last channel estimation result before the M channel estimation results.

For example, if the access network device indicates the time corresponding to the last channel estimation result and indicates the quantity of the one or more channel estimation results, the UE may determine the last channel estimation result, and determine, forward based on the quantity, remaining channel estimation results that are consecutive in time. Alternatively, if the access network device indicates the time corresponding to the first channel estimation result and indicates the quantity of the one or more channel estimation results, the UE may determine the first channel estimation result, and determine, backward based on the quantity, remaining channel estimation results that are consecutive in time.

For another example, if the access network device indicates the time corresponding to the last channel estimation result, the time interval between two adjacent channel estimation results in the one or more channel estimation results, and the quantity of the one or more channel estimation results, the UE may determine the last channel estimation result, and determine remaining channel estimation results based on the time interval and the quantity. In this manner, the one or more channel estimation results may be channel estimation results that are consecutive in time, or at least two adjacent channel estimation results may be inconsecutive in time. That the adjacent channel estimation results in the one or more channel estimation results are inconsecutive in time means that time corresponding to the two channel estimation results is inconsecutive. For example, between the two channel estimation results, the UE further obtains another channel estimation result, but due to a limitation of the time interval indicated by the access network device, the another channel estimation result is not included in the one or more channel estimation results.

For another example, if the access network device indicates the time corresponding to each of the one or more channel estimation results, it is equivalent to that the access network device indicates one or more pieces of time. In this case, the UE can determine the one or more channel estimation results based on the one or more pieces of time indicated by the access network device.

For example, a manner in which the UE obtains the third state information based on the one or more channel estimation results is as follows: The UE may input A channel estimation results into a first AI network, or input information obtained based on A channel estimation results into a first AI network, and the first AI network may output the third state information. A is a positive integer. For example, the information obtained based on the one or more channel estimation results is a concatenation result obtained by concatenating the one or more channel estimation results; or the information obtained based on the one or more channel estimation results is a result obtained by performing weighted combination on the one or more channel estimation results; or the information obtained based on the one or more channel estimation results is an average value (for example, an arithmetic average value) of the one or more channel estimation results.

In addition to maintaining the first encoder network, the UE further maintains the first AI network. Correspondingly, in addition to maintaining the first decoder network, the access network device may further maintain a second AI network corresponding to the first AI network. Both the first AI network and the second AI network are used for network state resetting. For example, the first AI network is used to reset a state of an encoder network maintained by the UE, and the second AI network is used to reset a state of a decoder network maintained by the access network device. The first AI network uses, for example, a CNN structure or an RNN structure. The second AI network uses, for example, a CNN structure or an RNN structure. Alternatively, the first AI network and the second AI network may be obtained through joint training. The following describes a training manner by using an example. In this example, joint training is performed on the first AI network, a reference encoder network, the second AI network, and a reference decoder network.

A training method may include the following several operation processes: Operation 1: A training node determines a group of training data in a training data set. Operation 2: Process each piece of training data in the group of training data by using the first AI network, a to-be-trained reference encoder network, the second AI network, and a to-be-trained reference decoder network, to obtain an output of a trained model (for example, including one or more of the first AI network, the reference encoder network, the second AI network, or the reference decoder network). Operation 3: For the group of training data, if a loss function satisfies a performance requirement, end training; or if a loss function does not satisfy a performance requirement, update a current model, and perform operation 1 again.

Operation 1 may occur before training. In operation 1, the training node may obtain at least one piece of downlink channel information within a historical period of time. The at least one piece of downlink channel information may form the training data set. In this disclosure, one or more groups of training data included in the training data set may be used to train a reference network. In this disclosure, one group of training data may include one or more pieces of training data, for example, include some or all data in the training data set. The at least one piece of downlink channel information may be stored by the training node, or transmitted by a data node to the training node. Each piece of training data may include downlink channel information obtained for T' consecutive times within the period of time, the downlink channel information obtained for T' consecutive times may be obtained by the UE by measuring a downlink reference signal for T' consecutive times, and T' is a positive integer. For example, downlink channel information obtained each time in the downlink channel information obtained by the UE for T' consecutive times may include M channel estimation results and P ideal restoration results. For more descriptions of content such as the training data, refer to the foregoing description. The training node needs to determine an input dimension of the reference encoder network, a dimension of output compressed information, and a dimension of output state information, and needs to determine an input dimension and an output dimension of the first AI network. In addition, the training node needs to determine an input dimension of the reference decoder network, a dimension of output restored information, and a dimension of output state information, and needs to determine an input dimension and an output dimension of the second AI network.

In an iterative training process, a to-be-trained reference encoder network and a to-be-trained reference decoder network are respectively a preset reference encoder network and a preset reference decoder network, or an updated reference encoder network and an updated reference decoder network that are obtained after a previous iterative training process is completed. In addition, in an iterative training process, a to-be-trained first AI network and a to-be-trained second AI network are respectively predefined AI networks, or an updated first AI network and an updated second AI network that are obtained after previous iterative training is completed.

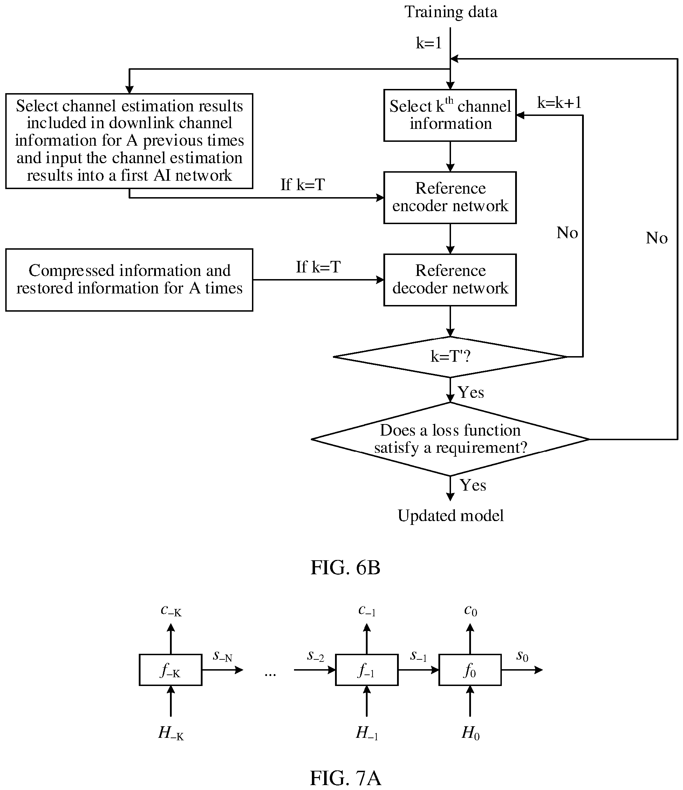

In the iterative training process, the training node determines a group of training data from the training data set. For details, refer to the foregoing description. In operation 2, for an operation performed by the training node for each piece of training data in a group of training data, refer to FIG. 6B.

Step a: The training node inputs M channel estimation results in $1^{st}$ downlink channel information included in the training data into the to-be-trained reference encoder network, to obtain compressed information and state information a that are output by the reference encoder network. The compressed information and the state information a are input into the to-be-trained reference decoder network. Then, the reference decoder network decodes the compressed information and outputs P pieces of restored information, and the reference decoder network further outputs state information b. The training node calculates correlation between the P pieces of restored information obtained this time and P ideal restoration results, where the correlation is denoted as $R_1$.

Step b: The training node inputs M channel estimation results in $L^{th}$ (1<L) downlink channel information included in the training data and state information output by the reference encoder network last time into the reference encoder network, to obtain compressed information and state information that are output by the reference encoder network. The compressed information and state information output by the reference decoder network last time are input into the reference decoder network, and the reference decoder network may output P pieces of restored information and output state information. The training node calculates correlation between the P pieces of restored information output by the reference decoder network this time and P ideal restoration results, where the correlation is denoted as $R_L$. A value of L is increased by 1.

Step c: Repeat step b T-1 times (A-1<T<T'). T is a positive integer. A value of T may be any one of a plurality of candidate values. For a same group of training data, each value in the candidate values may be used as a value of T to perform the training process a plurality of times.

Step d: The training node inputs channel estimation results included in downlink channel information obtained for A times before a $(T+1)^{th}$ time included in the training data into the first AI network, to obtain state information c. The training node inputs M channel estimation results included in downlink channel information obtained for the $(T+1)^{th}$ time included in the training data and the state information c into a current reference encoder network, to obtain compressed information and state information d that are output by the reference encoder network. Further, the training node inputs compressed information output by the reference encoder network for the A times before the $(T+1)^{th}$ time and restored information output by the reference decoder network for the A times into the second AI network, to obtain state information e, and inputs compressed information obtained for the $(T+1)^{th}$ time and the state information e into the reference decoder network, to obtain P pieces of restored information and state information f that are output by the reference decoder network. The training node calculates correlation between the P pieces of restored information output by the reference decoder network this time and P ideal restoration results, where the correlation is denoted as $R_{T+1}$. A value of L is set to T+2.

Step e: Repeat step b T'-T-1 times again.

Step f: For the training data, the training node calculates a loss function value as $\Sigma_i R_i$.

Operation 3 may be performed after each piece of training data in the group of training data is used for training according to the foregoing process. In operation 3, if an average value of loss functions of all training data included in the group of training data (or a value obtained through calculation according to another method by using loss functions of all training data) is less than or equal to a threshold B, or a loss function of each piece of training data included in the group of training data is less than or equal to a threshold B, it is considered that a reference encoder network, a reference decoder network, a first AI network, and a second AI network that are obtained after training based on the group of training data is completed are trained models, and a model training process ends. If an average value of loss functions of all training data included in the group of training data is not less than or equal to a threshold B, or a loss function of each piece of training data included in the group of training data is not less than or equal to a threshold B, parameters of one or more models in the first AI network, the second AI network, the reference encoder network, or the reference decoder network are updated, for example, the parameters of the models are updated by using a gradient descent method, and then the foregoing training process is performed again by using an updated first AI network, an updated second AI network, an updated reference encoder network, and an updated reference decoder network and another group of training data included in the training data set.

If the UE is a training node, and the UE trains the first AI network and the reference encoder network based on the foregoing steps, the UE performs a subsequent encoding operation by using an updated first AI network and an updated reference encoder network. If the UE also trains the second AI network and the reference decoder network based on the foregoing steps, the UE sends, to the access network device, information about a second AI network and information about a reference decoder network that are obtained through training. If the access network device is a training node, and the access network device trains the second AI network and the reference decoder network based on the foregoing steps, the access network device performs a subsequent decoding operation by using an updated second AI network and an updated reference decoder network. If the access network device further trains both the first AI network and the reference encoder network based on the foregoing steps, the access network device may send information about an updated first AI network and information about an updated reference encoder network to the UE. Alternatively, if a third-party node (for example, an AI network element) is a training node, the third-party node may send, to the UE, information about a first AI network and information about a reference encoder network that are obtained through training, and send, to the access network device, information about a second AI network and information about a reference decoder network that are obtained through training; or the third-party node may send, to the access network device, all of information about a first AI network, information about a reference encoder network, information about a second AI network, and information about a reference decoder network that are obtained through training, and then the access network device sends the information about the first AI network and the information about the reference encoder network to the UE.

Alternatively, the UE may obtain the third state information based on one or more channel estimation results by using another corresponding algorithm instead of using the first AI network.

In this manner, even if network state resetting is performed, the third state information may be considered for the input information of the first encoder network, and the third state information reflects the historical information of the downlink channel. Therefore, when obtaining the N pieces of compressed information and the first state information, the first encoder network may reference downlink channels within more time, so that time domain correlation between channels can be fully utilized.

In addition, the UE may alternatively reset a network state in another manner. This is not specifically limited.

Optionally, the access network device may send first signaling to the UE. The first signaling may indicate to reset a network state, or indicate to reset the state of the first encoder network. Therefore, the first signaling may also be referred to as network state resetting signaling, network resetting signaling, or the like. A name is not limited. The UE may reset the state of the first encoder network based on the first signaling, and the access network device may also reset the state of the first decoder network based on the first signaling. For example, the first signaling is higher layer signaling, for example, radio resource control (radio resource control, RRC) signaling or a media access control (media access control, MAC) control element (control element, CE), or may be physical layer signaling, for example, downlink control information (downlink control information, DCI). For example, the access network device decodes compressed information from the UE, to obtain information about a downlink channel. If the access network device determines that accuracy of the obtained information about the downlink channel is relatively low, the access network device may send the first signaling to the UE to indicate to reset a network state. Correspondingly, the access network device may also reset the state of the first decoder network.

Optionally, the first signaling may indicate resetting start time and/or an offset. The UE can determine reset time based on the first signaling.

For example, the first signaling indicates the resetting start time, for example, may indicate a time unit to which the resetting start time belongs. The time unit is, for example, a radio frame (radio frame), a subframe (subframe), a slot (slot), or an orthogonal frequency division multiplexing (orthogonal frequency division multiplexing, OFDM) symbol (symbol). In addition, if the first signaling indicates the time unit to which the resetting start time belongs, an indication manner is, for example, that the first signaling includes time domain information of the time unit, or the first signaling includes an index of the time unit.

For example, the first signaling indicates a first offset. The access network device may preconfigure reference time for the UE, or the UE and the access network device may determine reference time according to a predefined rule. Regardless of the preconfigured reference time or the reference time determined according to the predefined rule, a unit may be the time unit. The UE can determine the resetting start time based on the reference time and the first offset. Optionally, the predefined rule is, for example, using time at which the UE receives the first signaling as the reference time, or using time at which the UE sends compressed information to the access network device last time as the reference time. For example, if the reference time determined according to the predefined rule is a $T1^{th}$ slot, and the first offset is T2 slots, the resetting start time is a slot to which (T1+T2) belongs. For another example, if the preconfigured reference time is a $T1^{th}$ radio frame, and the first offset has duration of T2, the resetting start time is (T1+T2).

Optionally, if the time unit is a radio frame, when the start time is calculated based on the reference time, a start time domain position of the reference time in the radio frame further needs to be determined. The start time domain position of the reference time in the radio frame may be default, for example, a start slot in the radio frame or a last slot in the radio frame. For example, if the preconfigured reference time is a $T1^{th}$ frame, and the first offset is T2 slots, the resetting start time is $(T1_0+T2)$, and the used $T1_0$ is, for example, a time domain position of a start slot in the $T1^{th}$ radio frame, or a time domain position of a last slot in the $T1^{th}$ radio frame.

For another example, if the preconfigured reference time is a $T1^{th}$ radio frame, the first offset includes a first sub-offset and a second sub-offset, and the first sub-offset is T2 radio frames, a resetting operation should be performed within a $[T=(T1+T2)]^{th}$ radio frame. In addition, if the second sub-offset is T3 slots, the resetting start time is $(T_0+T3)$, and the used $T_0$ is, for example, a time domain position of a start slot in a $T^{th}$ radio frame, or a time domain position of a last slot in a $T^{th}$ radio frame.

Alternatively, the first signaling indicates the resetting start time, and the UE may directly determine the resetting start time based on the first signaling. For example, if start time configured by using the first signaling is a moment T1, the resetting start time is the moment T1.

Alternatively, the first signaling indicates the reference time and the first offset, and the UE can determine the resetting start time based on the reference time and the first offset.

In the manner described above, network state resetting may be aperiodic. For example, if the access network device considers that a network state needs to be reset, the access network device may send the first signaling to the UE. Alternatively, a network state may be periodically reset. For example, the first signaling may indicate a resetting start moment and/or an offset, and indicate a resetting periodicity. According to the method, the access network device may send the first signaling only once, and the UE may reset a network state in each resetting periodicity based on the first signaling.

For example, the first signaling indicates the first offset and the resetting periodicity. In addition, the access network device further preconfigures reference time for the UE, or the UE and the access network device may determine reference time according to a predefined rule. In this case, the UE can determine, based on the reference time and the first offset, resetting start time in each resetting periodicity. For example, if the preconfigured reference time is a $T1^{th}$ slot, the first offset is T2 slots, and the resetting periodicity is T3 slots, in a first resetting periodicity, resetting start time is a slot to which (T1+T2) belongs; in a second resetting periodicity, resetting start time is a slot to which (T1+T2+T3) belongs; in a third resetting periodicity, resetting start time is a slot to which (T1+T2+T3+T3) belongs; and so on.

In the foregoing description, the first signaling is sent by the access network device to the UE, or possibly, the first signaling is sent by the UE to the access network device. For example, if the UE determines, by measuring a downlink reference signal, that a downlink channel changes greatly in time domain, the UE may send the first signaling to the access network device, to indicate network state resetting. In addition, the UE may autonomously reset the state of the first encoder network. For content such as an implementation of the first signaling, refer to the foregoing descriptions.

If the network state is reset before S502, for example, if the UE resets the state of the first encoder network between S502 and obtaining compressed information by the UE by using the first encoder network last time, or if the UE obtains compressed information by using the first encoder network for the first time in S502, when the first information is determined, the second state information may not be considered. In this case, in addition to the M channel estimation results, a factor for determining the first information may further include another factor, or may not include another factor. The following uses examples for description.

1. The first information may be determined based on the M channel estimation results. For example, the factor for determining the first information includes the M channel estimation results, and does not include other information. Optionally, if the UE resets the state of the first encoder network in the foregoing first manner, the first information may be determined based on the M channel estimation results. Alternatively, if the UE resets the state of the first encoder network in the foregoing first manner, although an initial value that is of state information of the first encoder network and that is determined by the UE is not used as a factor for determining the first information, only when the initial value has no specific meaning, it is determined that the initial value is not used as a factor for determining the first information. Therefore, it may also be considered that the first information is determined based on the M channel estimation results and the initial value.

For example, the initial value is represented as $I_0$, the first information includes information obtained by processing the M channel estimation results, and the first information is represented as $\tilde{H}_1$. Output information of the first encoder network includes the N pieces of compressed information and the first state information. For example, N=1, the compressed information may be represented as $c_1$, for example, $c_1$ is a real number vector whose length is C, and the first state information may be represented as $S_1$. As output information of the first encoder network, the first state information may reflect input information of the first encoder network, that is, may reflect downlink channels corresponding to the M channel estimation results. Therefore, the first state information may reflect the downlink channels corresponding to the M channel estimation results.

It is assumed that $\tilde{H}_1$ is the $(N_t, N_r, N_{sub})$-dimensional downlink channel tensor described in S501, and the initial value $I_0$ and the first state information have a same dimension, for example, $(L_0, L_1, L_2)$, where a value of $L_0, L_1, L_2$ is a specific implementation of the first encoder network. This is not limited. For example, in terms of a specific value of $L_0, L_1, L_2$, a dimension of the first state information is the same as a dimension of $\tilde{H}_1$. Further, a processing process of the first encoder network may satisfy the following relationship:

$$r_1 = f_1(I_0) \qquad \text{(Formula 1)}$$

$$h_1 = f_2(\tilde{H}_1) \qquad \text{(Formula 2)}$$

$$[c_1, S_1] = g(r_1, h_1) \qquad \text{(Formula 3)}$$

The function $f_1$ is used to process information that is included in the first information and that is determined based on the state information. If the factor for determining the first information does not include the state information, Formula 1 may not need to be executed. The function $f_2$ is used to process information that is included in the first information and that is determined based on the channel estimation results. The first encoder network may concatenate two parts of information processed according to the function $f_1$ and the function $f_2$, and input a concatenation result into the function $g$, to obtain the compressed information $c_1$ and obtain the first state information $S_1$.

2. The first information may be determined based on the M channel estimation results and the third state information. The third state information is, for example, determined based on historical information of a downlink channel.

Optionally, if the UE resets the state of the first encoder network in the foregoing second manner, the first information may be determined based on the M channel estimation results and the third state information. For a processing manner of the first encoder network, refer to the description in 1.

3. The first information may be determined based on the M channel estimation results and K channel estimation results. K is a positive integer.

Optionally, if the UE resets the state of the first encoder network in the foregoing first manner, the first information may be determined based on the M channel estimation results, or may be determined based on the M channel estimation results and the K channel estimation results. Optionally, the K channel estimation results may be determined by the UE, or indicated by the access network device. For an indication manner of the access network device, refer to the indication manner of the access network device for the one or more channel estimation results used to obtain the third state information in S502.

The K channel estimation results are, for example, channel estimation results historically obtained by the UE. This is equivalent to that the UE determines the first information based on a currently obtained channel estimation result and a historically obtained channel estimation result. The historically obtained channel estimation result has been obtained by the UE, and may be locally stored in the UE. The UE needs only to obtain stored information, and does not need to consume much time. Therefore, efficiency is relatively high.

In this case, the N pieces of compressed information and the first state information are obtained based on the M channel estimation results and the K channel estimation results, and can reflect statuses of downlink channels corresponding to the M channel estimation results and the K channel estimation results. Downlink channels have time domain correlation, and a correlation status of the downlink channels in time domain can be better reflected by using the N pieces of compressed information and the first state information, so that the access network device can restore a more accurate downlink channel based on the N pieces of compressed information.

For example, the first information includes the M channel estimation results and the K channel estimation results; or the first information includes information obtained by performing corresponding processing on the M channel estimation results and/or the K channel estimation results. For a processing manner, refer to S501.

FIG. 7A is a diagram of input information and output information of the first encoder network. In FIG. 7A, an example in which the first information includes the M channel estimation results and the K channel estimation results and N=K+M is used. In FIG. 7A, $H_0$ represents the M channel estimation results (for example, M=1), $H_{-1}$ to $H_{-K}$ represent the K channel estimation results, $c_0$ to $c_{-K}$ represent the N pieces of compressed information (because an example in which N=K+M and M=1 is used, N=K+1), and $s_0$ represents the first state information. In FIG. 7A, an example in which K+1=N is used. FIG. 7A may satisfy the following relationship:

$$[c_{-K}, s_{-K}] = f_{-K}(H_{-K}, 0) \qquad \text{(Formula 4)}$$

$$[c_{-i}, s_{-i}] = f_{-i}(H_{n_{-i}}, s_{-i-1}), 0 \leq i < K \qquad \text{(Formula 5)}$$

The first state information may be obtained based on the M channel estimation results and the K channel estimation results. Therefore, the first state information may reflect downlink channels corresponding to the M channel estimation results and the K channel estimation results. $s_{-1}$ to $s_{-K}$ represent intermediate variables in a process of calculating $c_0$ to $c_{-K}$ and $s_0$. More specifically, in Formula 4 and Formula 5, through iterative calculation of $s_{-1}$ to $s_{-K}$, $s_{-i}$ includes information about the $(K - i + 1)$ channel estimation results $H_{-i}$ to $H_{-K}$, until $s_0$ is finally obtained through calculation based on $f_{-i}$, so that the first state information $s_0$ can reflect the downlink channels corresponding to the M channel estimation results and the K channel estimation results.

4. The first information may be determined based on the M channel estimation results, the third state information, and K channel estimation results.

Optionally, if the UE resets the state of the first encoder network in the foregoing second manner, the first information may be determined based on the M channel estimation results and the third state information, or may be determined based on the M channel estimation results, the third state information, and the K channel estimation results.

A channel estimation result used to obtain the third state information and the K channel estimation results may have an intersection set, or may not have an intersection set.

In this case, the N pieces of compressed information and the first state information are obtained based on the M channel estimation results, the third state information, and the K channel estimation results, and can reflect statuses of downlink channels corresponding to the M channel estimation results, the third state information, and the K channel estimation results. Downlink channels have time domain correlation, and a correlation status of the downlink channels in time domain can be better reflected by using the N pieces of compressed information and the first state information, so that the access network device can restore a more accurate downlink channel based on the N pieces of compressed information.

S503: The UE sends the N pieces of compressed information to the access network device. Correspondingly, the access network device receives the N pieces of compressed information from the UE.

S504: The access network device decodes (or processes) the N pieces of compressed information by using the first decoder network, to obtain P pieces of restored information (or referred to as "P pieces of decoded information") and fourth state information.

In this disclosure, the UE may perform, by using the first encoder network, joint compression on information obtained based on a plurality of channel estimation results, and the access network device may decode the N pieces of compressed information by using the corresponding first decoder network. Therefore, the access network device needs to first determine a to-be-used decoder network. If the access network device sends the first indication information to the UE to indicate the first reference encoder network, the access network device may determine the first reference decoder network corresponding to the first reference encoder network. Alternatively, if the UE sends the second indication information to the access network device to indicate the first reference encoder network, the access network device may determine the first reference decoder network corresponding to the first reference encoder network. Alternatively, if the UE sends the second indication information to the access network device to indicate a reference network, the access network device may determine a first reference decoder network included in the reference network.

After determining the first reference decoder network, the access network device may obtain the first decoder network based on the first reference decoder network. For a manner in which the access network device obtains the first decoder network, refer to the description of S502.

After determining the decoder network, the access network device may decode the N pieces of compressed information based on the decoder network. For example, an implementation in which the access network device decodes the N pieces of compressed information by using the first decoder network is that the access network device inputs second information into the first decoder network, and the first decoder network may process the second information. After processing, the first decoder network may output the P pieces of restored information. The second information may be determined based on the N pieces of compressed information. This is equivalent to that the P pieces of restored information may be obtained based on the N pieces of compressed information. Optionally, each of the P pieces of restored information corresponds to some or all of the N pieces of compressed information. Compressed information corresponding to different restored information may be the same, or may be different or not completely the same. Different restored information may correspond to a same parameter of same compressed information, or different restored information may correspond to different parameters of same compressed information, or different restored information may correspond to parameters of same compressed information that are not completely the same. That one piece of restored information corresponds to one piece of compressed information may be understood as that the restored information reflects a feature of the compressed information, or that a process of generating the restored information is related to the compressed information, or that the restored information corresponds to all or some parameters of the compressed information. A value relationship between N and P is not limited. For example, N may be greater than P, equal to P, or less than P. In addition, a value relationship between M and P is not limited either. For example, M may be greater than P, equal to P, or less than P.

The second information may include the N pieces of compressed information, or include a processing result obtained by performing corresponding processing on the N pieces of compressed information. A processing manner is, for example, concatenation or weighted combination. This is not limited.

In this disclosure, in addition to outputting the P pieces of restored information, the first decoder network may further output the fourth state information. Optionally, state information output by the first decoder network may be a tensor obtained based on the second information, and the second information represents downlink channel information. Therefore, the fourth state information may also represent downlink channel information, and the downlink channel information represented by the fourth state information may include information about downlink channels corresponding to the N pieces of compressed information. The fourth state information may be used to determine next input information of the first decoder network, and next application of the first decoder network means that the access network device decodes compressed information by using the first decoder network next time. In a next decoding process, the access network device may input, into the first decoder network, information determined based on compressed information received next time (where a quantity of pieces of compressed information received by the access network device each time (or pieces of compressed information input into the first decoder network each time) may be one or more), and may further input, into the first decoder network, information determined based on the fourth state information. In this way, the first decoder network can mine correlation between a downlink channel corresponding to next compressed information and downlink channels corresponding to the current N pieces of compressed information, and obtain, based on such time domain correlation, restored information output next time, so that a downlink channel restored by the access network device based on compressed information can be more accurate.

For a training process of the reference decoder network, refer to the description of the training process in S502.

If network state resetting is not performed before S504, for example, if the state of the first decoder network is not reset between S504 and obtaining restored information by the access network device by using the first decoder network last time, and if the access network device does not obtain compressed information by using the first decoder network for the first time in S504 (that is, the access network device has obtained compressed information at least once by using the first decoder network), in addition to the N pieces of compressed information, the fifth state information may be further considered when the second information is determined. For example, the fifth state information is state information output by the first decoder network last time. In this case, the fifth state information may represent information about a downlink channel corresponding to compressed information input into the first decoder network last time. Therefore, the fourth state information output by the first decoder network may further reflect the information about the downlink channel corresponding to the fifth state information in addition to the information about the downlink channels corresponding to the N pieces of compressed information. It may be understood that the access network device continuously obtains restored information and continuously updates state information of the first decoder network. For example, the UE periodically reports compressed information, and the access network device may periodically obtain restored information. Alternatively, although not periodically, the UE may report compressed information once at intervals, and the access network device may obtain restored information once at intervals.

For example, the access network device receives the N pieces of compressed information from the UE in an $n^{th}$ process of obtaining restored information (or an $n^{th}$ decoding process), and the access network device may determine corresponding information, for example, referred to as information A, based on the N pieces of compressed information and the fifth state information. The access network device may input the information A into the first decoder network, and the first decoder network may output the P pieces of restored information, and may further output the fourth state information. The fifth state information is state information output by the first decoder network in an $(n-1)^{th}$ decoding process of the access network device. Then, in an $(n+1)^{th}$ decoding process, the access network device may further receive at least one piece of compressed information from the UE, the access network device may determine corresponding information, for example, referred to as information B, based on the at least one piece of compressed information and the fourth state information (that is, the fourth state information output in the $n^{th}$ decoding process), the access network device may input the information B into the first decoder network, and the first decoder network may output corresponding restored information and state information, and so on. It can be learned that, in one decoding process, the access network device may determine current input information of the first decoder network based on state information output by the first decoder network last time, and the state information output by the first decoder network last time can reflect a downlink channel within historical time, so that the first decoder network can mine correlation between downlink channels within a plurality of pieces of time. Utilization of the time domain correlation between the channels helps improve accuracy of restored information obtained by the access network device.

The second information is determined based on the N pieces of compressed information and the fifth state information. For example, in an implementation, the second information includes the N pieces of compressed information and the fifth state information. Alternatively, in another implementation, the second information includes information obtained by performing corresponding processing on the N pieces of compressed information, and includes information obtained by performing corresponding processing on the fifth state information. Alternatively, in another implementation, the second information includes information obtained by performing joint processing on the N pieces of compressed information and the fifth state information. For example, a manner in which the access network device processes the N pieces of compressed information is that the access network device concatenates or performs weighted averaging on the N pieces of compressed information. For another example, a manner in which the access network device processes the fifth state information is normalizing the fifth state information. For a normalization manner, refer to the foregoing description of normalizing the second state information. For another example, a manner in which the access network device performs joint processing on the N pieces of compressed information and the fifth state information is normalizing the N pieces of compressed information and the fifth state information. For a normalization manner, refer to the foregoing description of normalizing the M channel estimation results and the second state information.

As described in S502, network state resetting may be performed in this disclosure. The network state resetting may include resetting the state of the first encoder network, and/or resetting the state of the first decoder network. The foregoing describes how to reset the state of the first encoder network, and the following describes how to reset the state of the first decoder network.

Optionally, a first manner in which the access network device resets the state of the first decoder network is that the access network device resets state information that should be input into the first decoder network to an initial value. For example, the access network device and the UE may determine the initial value in a same manner. Therefore, the initial value of the first encoder network obtained by the UE in the first manner of resetting the first encoder network in S502 may be the same as the initial value of the first decoder network obtained by the access network device herein. The initial value obtained by the access network device may have no actual meaning. For example, the initial value does not represent time domain information of a downlink channel. Therefore, the initial value may not need to be input into the first decoder network. This may be understood as that the input information of the first decoder network may be irrelevant to the initial value.

Alternatively, a second manner in which the access network device resets the state of the first decoder network is that the access network device obtains sixth state information based on historical downlink channel information, and uses the sixth state information as new to-be-input state information of the first decoder network. This may be understood as that the input information of the first decoder network may be determined based on the sixth state information. This manner corresponds to the second manner in which the UE resets the first encoder network.

Optionally, the access network device may obtain the sixth state information based on one or more pieces of compressed information and/or restored information. The one or more pieces of compressed information and/or restored information are historically obtained by the access network device. For example, the one or more pieces of compressed information and/or restored information are obtained by the access network device within recent time. In this case, it is equivalent to that the sixth state information is determined based on historical information of a downlink channel (or a historical time domain downlink channel or a historical downlink channel), and the sixth state information may represent a historical time domain status of the downlink channel, or represent the historical downlink channel.

For example, a manner in which the access network device obtains the sixth state information based on the one or more pieces of compressed information and/or restored information is that the access network device may input the one or more pieces of compressed information and/or restored information into the second AI network, or input information obtained based on the one or more pieces of compressed information and/or restored information into the second AI network, and the second AI network may output the sixth state information. For example, the information obtained based on the one or more pieces of compressed information and/or restored information is a concatenation resultconcatenation result obtained by concatenating the one or more pieces of compressed information and/or restored information. Alternatively, the information obtained based on the one or more pieces of compressed information and/or restored information is a result obtained by performing weighted combination on the one or more pieces of compressed information and/or restored information. Alternatively, the information obtained based on the one or more pieces of compressed information and/or restored information is an average value (for example, an arithmetic average value) of the one or more pieces of compressed information and/or restored information.

Alternatively, the access network device may obtain the sixth state information based on the one or more pieces of compressed information and/or restored information by using another corresponding algorithm instead of using the second AI network.

In this manner, even if network state resetting is performed, the sixth state information may be considered for the input information of the first decoder network, and the sixth state information reflects the historical information of the downlink channel. Therefore, when obtaining the P pieces of restored information and the fourth state information, the first decoder network may reference downlink channels within more time, so that time domain correlation between channels can be fully utilized.

In addition, the access network device may alternatively reset a network state in another manner. This is not specifically limited.

Optionally, a manner in which the UE resets the state of the first encoder network may correspond to a manner in which the access network device resets the state of the first decoder network, so that information on both sides can better correspond to each other, and restored information obtained by the access network device is more accurate. For example, if the manner in which the UE resets the state of the first encoder network is the first manner, the manner in which the access network device resets the state of the first decoder network may also be the first manner. Alternatively, if the manner in which the UE resets the state of the first encoder network is the second manner, the manner in which the access network device resets the state of the first decoder network may also be the second manner. A specific resetting manner may be configured by the access network device, predefined by using a protocol, or the like. For example, if the access network device indicates, by using signaling, the UE to perform resetting in the second manner, the UE may reset the state of the first encoder network in the second manner, and the access network device may reset the state of the first decoder network in the second manner.

If the network state is reset before S504, for example, if the access network device resets the state of the first decoder network between S504 and obtaining restored information by the access network device by using the first decoder network last time, or if the access network device obtains restored information by using the first encoder network for the first time in S504, when the second information is determined, the fifth state information may not be considered. In this case, in addition to the N pieces of compressed information, a factor for determining the second information may further include another factor, or may not include another factor. The following uses examples for description.

1. The second information may be determined based on the N pieces of compressed information. For example, the factor for determining the second information includes the N pieces of compressed information, and does not include other information.

Optionally, if the access network device resets the state of the first decoder network in the foregoing first manner, the second information may be determined based on the N pieces of compressed information. In this case, the N pieces of compressed information may be obtained based on the M channel estimation results, or may be obtained based on the M channel estimation results and the K channel estimation results.

For example, the N pieces of compressed information are obtained based on the M channel estimation results. The initial value determined by the access network device is represented as $I'_0$, and the second information includes the N pieces of compressed information. For example, N=1, and the compressed information is represented as $c_1$. Output information of the first decoder network includes the P pieces of restored information and the fourth state information. For example, P=1, the restored information may be represented as $H'_1$, and the fourth state information may be represented as $S'_1$. As output information of the first decoder network, the fourth state information may reflect input information of the first decoder network, that is, may reflect downlink channels corresponding to the N pieces of compressed information. Therefore, it may be considered that the fourth state information reflects the downlink channels corresponding to the N pieces of compressed information.

It is assumed that $H'_1$ is the P pieces of restored information (for example, P= 1) output by the first decoder network, and a dimension of $H'_1$ is, for example, the same as a dimension of a channel estimation result (for example, $\bar{H}_1$) input into the first encoder network, and is $(N_t, N_r, N_{sub})$. A dimension of the initial value $I'_0$ of the state information of the first decoder network is the same as a dimension of the fourth state information, and for example, is $(L'_0, L'_1, L'_2)$, where a value of $L'_0, L'_1, L'_2$ is a specific implementation of the first decoder network. This is not limited. For example, in terms of a specific value of $L'_0, L'_1, L'_2$, the dimension of the fourth state information is the same as the dimension of $H'_1$. Further, a processing process of the first decoder network may satisfy the following relationship:

$$r'_1 = f'_1(I'_0) \qquad\qquad \text{(Formula 6)}$$

$$c'_1 = f'_2(c_1) \qquad\qquad \text{(Formula 7)}$$

$$[H'_1, S'_1] = g'(r'_1, c'_1) \qquad\qquad \text{(Formula 8)}$$

The function $f'_1$ is used to process information that is included in the second information and that is determined based on the state information. If the factor for determining the second information does not include the state information, Formula 6 may not need to be executed. The function $f'_2$ is used to process information that is included in the second information and that is determined based on the compressed information. The first decoder network may concatenate two parts of information processed according to the function $f'_1$ and the function $f'_2$, and input a concatenation result into the function $g'$, to obtain the restored information $H'_1$ and obtain the fourth state information $S'_1$.

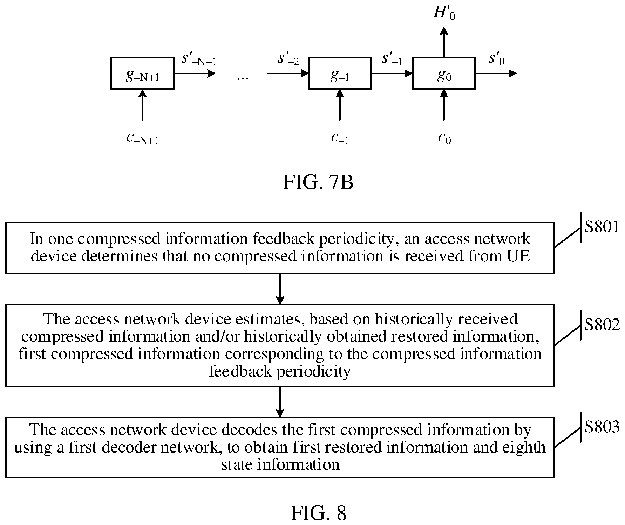

For another example, the N pieces of compressed information are obtained based on the M channel estimation results and the K channel estimation results. FIG. 7B is a diagram of input information and output information of the first decoder network. In FIG. 7B, an example in which the second information includes the N pieces of compressed information is used. In FIG. 7B, $c_{-N+1}$ to $c_0$ represent the N pieces of compressed information, $H'_0$ represents the P pieces of restored information (for example, P=1), and $s'_0$ represents the fourth state information. FIG. 7B may satisfy the following relationship:

$$s'_{-N+1} = g_{-N+1}(c_{-N+1}, 0) \qquad\qquad \text{(Formula 9)}$$

$$s'_{-i} = g_{-i}(c_{-i}, s'_{-i-1}), 1 \le i < N - 1 \qquad\qquad \text{(Formula 10)}$$

$$[H'_0, s'_0] = g_0(c_0, s'_{-1}) \qquad\qquad \text{(Formula 11)}$$

The fourth state information may be obtained based on the N pieces of compressed information, and the N pieces of compressed information reflect downlink channel information. Therefore, the fourth state information may reflect the information about the downlink channels corresponding to the N pieces of compressed information. $s'_{-1}$ to $s'_{-N+1}$ represent intermediate variables in a process of calculating the restored information $H'_0$ and the fourth state information $s'_0$. More specifically, in Formula 9 and Formula 10, through iterative calculation of $s'_{-1}$ to $s'_{-N+1}$, $s'_{-i}$ includes information about the ($N - i$) pieces of compressed information $c_{-i}$ to $c_{-N+1}$, until $s'_0$ is finally obtained through calculation based on $g_0$. In this way, the fourth state information $s'_0$ can reflect information about the N pieces of compressed information. The N pieces of compressed information are obtained based on the M channel estimation results and the K channel estimation results. Therefore, the fourth state information $s'_0$ may reflect downlink channels corresponding to the M channel estimation results and the K channel estimation results.

2. The second information may be determined based on the N pieces of compressed information and the sixth state information. The sixth state information is, for example, determined based on historical information of a downlink channel.

Optionally, if the access network device resets the state of the first decoder network in the foregoing second manner, the second information may be determined based on the N pieces of compressed information and the sixth state information. In this case, the N pieces of compressed information may be obtained based on the M channel estimation results and the third state information, or may be obtained based on the M channel estimation results, the third state information, and the K channel estimation results. For a processing manner of the first decoder network, refer to the description in 1.

After obtaining the P pieces of restored information, optionally, the access network device may obtain the downlink channel information based on the P pieces of restored information. After obtaining the downlink channel information, the access network device may determine, based on the downlink channel information, one or more pieces of information such as a quantity of streams used when data is sent to the UE, a modulation order used when the data is sent to the UE, or a code rate of a channel (for example, a physical downlink control channel (physical downlink control channel, PDCCH)) carrying the data. In addition, the access network device may further determine, based on the downlink channel information, a precoding matrix used when the data is sent to the UE or the like. Alternatively, the access network device does not need to obtain the downlink channel information based on the P pieces of restored information, but directly uses the P pieces of restored information. In this case, the access network device may determine, based on the P pieces of restored information, one or more pieces of information such as a quantity of streams used when data is sent to the UE, a modulation order used when the data is sent to the UE, or a code rate of a channel carrying the data. In addition, the access network device may further determine, based on the P pieces of restored information, a precoding matrix used when the data is sent to the UE or the like.

In this disclosure, in addition to compressed information, the first encoder network on a UE side may further output the first state information. The first state information may represent the information about the downlink channels corresponding to the M channel estimation results, and the first state information may be further used to determine next input information of the first encoder network. This is equivalent to that when obtaining compressed information next time, in addition to referencing a downlink channel corresponding to a channel estimation result obtained next time, the first encoder network may further reference the downlink channels corresponding to the M channel estimation results by using the first state information. Downlink channels have correlation in time domain, and when compressed information is obtained, a historical downlink channel is further referenced in addition to a current downlink channel. Therefore, the first encoder network may make full use of time domain correlation between the channels, and use a small amount of compressed information to represent the current downlink channel. This helps reduce feedback overheads of the compressed information. Similarly, the first decoder network may also make full use of the time domain correlation between the channels, to improve accuracy of a downlink channel restored by the access network device.

In the embodiment shown in FIG. 5, an example in which the access network device correctly receives compressed information from the UE is used. Alternatively, there is another possibility that the access network device fails to receive the compressed information from the UE. This may cause an error when the access network device restores the compressed information. In view of this, this disclosure provides a second communication method. When the access network device fails to receive the compressed information from the UE, an error probability can be reduced by using the method. FIG. 8 is a flowchart of the method.

S801: In one compressed information feedback periodicity, the access network device determines that no compressed information is received from the UE.

For example, the UE may periodically send compressed information to the access network device, and such a periodicity is, for example, referred to as a compressed information feedback periodicity. In this case, the access network device may receive the compressed information from the UE based on the compressed information feedback periodicity. If the access network device receives no compressed information from the UE in one compressed information feedback periodicity, it may be determined that compressed information in the compressed information feedback periodicity is lost.

S802: The access network device estimates, based on historically received compressed information and/or historically obtained restored information, first compressed information corresponding to the compressed information feedback periodicity.

In other words, if the access network device receives no compressed information in the compressed information feedback periodicity, the access network device may estimate the compressed information in the compressed information feedback periodicity based on historical information (including the historically received compressed information and/or the historically obtained restored information).

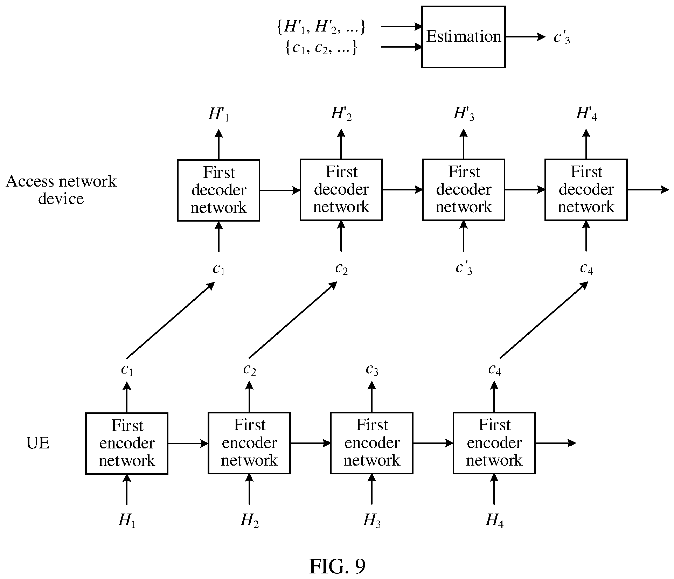

FIG. 9 is an example in which the access network device estimates compressed information. $c_1$ to $c_4$ represent compressed information obtained in four compressed information feedback periodicities; $H_1$ to $H_4$ represent channel estimation results input into a first encoder network in the four compressed information feedback periodicities; and $H'_1$ to $H'_4$ represent restored information output by a first decoder network in the four compressed information feedback periodicities. FIG. 9 shows four compressed information feedback periodicities in total. It is assumed that the access network device fails to receive compressed information from the UE in a third compressed information feedback periodicity. In this case, the access network device may estimate compressed information in the third compressed information feedback periodicity based on historical information. For example, the compressed information is expressed as $c'_3$. For example, the historical information includes some or all compressed information received in one or more compressed information feedback periodicities before the third compressed information feedback periodicity, and/or includes some or all restored information obtained based on the some or all compressed information received in the one or more compressed information feedback periodicities before the third compressed information feedback periodicity. For example, if a first compressed information feedback periodicity and a second compressed information feedback periodicity are included before the third compressed information feedback periodicity, the historical information may include one or more of the following: some or all compressed information received in the first compressed information feedback periodicity, some or all restored information obtained based on the compressed information received in the first compressed information feedback periodicity, some or all compressed information received in the second compressed information feedback periodicity, or some or all restored information obtained based on the compressed information received in the second compressed information feedback periodicity.

For example, the compressed information that is in the third compressed information feedback periodicity and that is estimated by the access network device based on the historical information may satisfy the following relationship:

$$c'_3 = w([H_{3-1}, H_{3-2}, \dots, H_{3-E}], [c_{3-1}, c_{3-2}, \dots, c_{3-D}]) \qquad \text{(Formula 12)}$$

$H_{3-1}$ *to* $H_{3-K}$ represent E pieces of restored information obtained before the third compressed information feedback periodicity, and $c_{3-1}$ *to* $c_{3-D}$ represent D pieces of compressed information received before the third compressed information feedback periodicity. The access network device may concatenate the E pieces of restored information and the D pieces of compressed information, and input a concatenation result into the function w, to obtain the compressed information $c'_3$ in the third compressed information feedback periodicity.

S803: The access network device decodes (or processes) the first compressed information by using the first decoder network, to obtain first restored information and eighth state information. Third information may be determined based on seventh state information and the first compressed information. For concepts such as the first decoder network, refer to the description of the embodiment shown in FIG. 5.

For example, an implementation in which the access network device decodes the first compressed information by using the first decoder network is that the access network device inputs the third information into the first decoder network, and the first decoder network may process the third information. After processing, the first decoder network may output the first restored information and the eighth state information.

The third information may be determined based on the first compressed information, or may be determined based on the seventh state information and the first compressed information.

If network state resetting is not performed before S803, for example, if the state of the first decoder network is not reset between S803 and obtaining restored information by the access network device by using the first decoder network last time, and if the access network device does not obtain compressed information by using the first decoder network for the first time in S803 (that is, the access network device has obtained compressed information at least once by using the first decoder network), in addition to the first compressed information, the seventh state information may be further considered when the third information is determined. The seventh state information is, for example, state information output by the first decoder network last time. For example, if the first compressed information is the compressed information in the third compressed information feedback periodicity, the seventh state information may be state information output by the first decoder network in the second compressed information feedback periodicity. The eighth state information may be used to determine next input information of the first decoder network. Then, if the access network device further receives compressed information in a next compressed information feedback periodicity, the access network device may input information determined based on the received compressed information and the eighth state information into the first decoder network (certainly, if the access network device resets the state of the first decoder network during this period, the information input into the first decoder network may change, and for such case, refer to the description of the embodiment shown in FIG. 5), and so on.

If the network state is reset before S803, for example, if the access network device resets the state of the first decoder network between S803 and obtaining restored information by the access network device by using the first decoder network last time, or if the access network device obtains restored information by using the first encoder network for the first time in S803, when the third information is determined, the state information output by the first decoder network last time may not be considered. In this case, the seventh state information is, for example, an initial value, or information determined based on historical information of a downlink channel. For corresponding content of this part, refer to S504 in the embodiment shown in FIG. 5.

According to S802 and S803, the access network device first obtains the compressed information through estimation, and then inputs the information determined based on the compressed information into the first decoder network to obtain the restored information. Alternatively, S802 and S803 may be replaced with another step: The access network device estimates, based on historically received compressed information and/or historically obtained restored information, restored information and ninth state information corresponding to the compressed information feedback periodicity. The ninth state information may be used to determine next input information of the first decoder network. In other words, if the access network device receives no compressed information in the compressed information feedback periodicity, the access network device may estimate restored information in the compressed information feedback periodicity based on historical information (including the historically received compressed information and/or the historically obtained restored information). Therefore, the restored information does not need to be obtained by using the first decoder network in the compressed information feedback periodicity, so that processing steps can be reduced, and power consumption can be reduced.

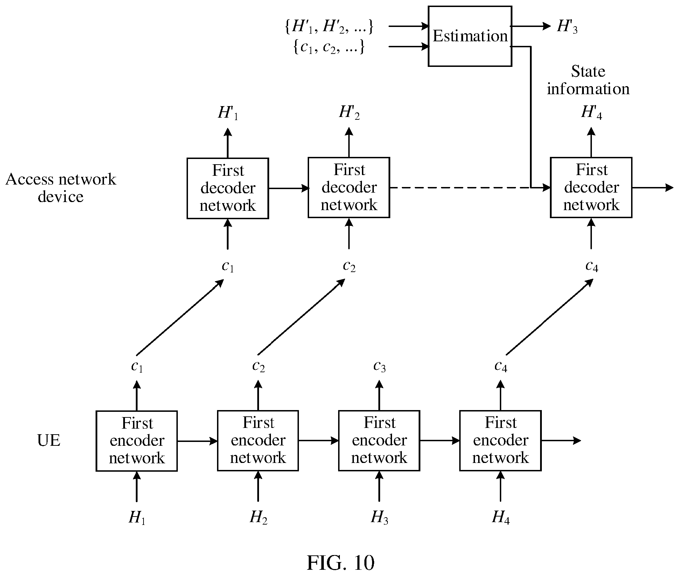

FIG. 10 is an example in which the access network device estimates restored information. $c_1$ to $c_4$ represent compressed information reported by the UE in four compressed information feedback periodicities; $H_1$ to $H_4$ represent channel estimation results input into the first encoder network in the four compressed information feedback periodicities; and $H'_1$, $H'_2$, and H4 represent restored information output by the first decoder network in three compressed information feedback periodicities. FIG. 10 shows four compressed information feedback periodicities in total. It is assumed that the access network device fails to receive compressed information from the UE in a third compressed information feedback periodicity. In this case, the access network device may estimate restored information and state information in the third compressed information feedback periodicity based on historical information. For example, the restored information is expressed as $H'_3$. For a description of the historical information, refer to the foregoing description.

For example, the restored information that is in the third compressed information feedback periodicity and that is estimated by the access network device based on the historical information may satisfy the following relationship:

$$[H'_3, S'_3] = u([H_{3-1}, H_{3-2}, ..., H_{3-E}], [c_{3-1}, c_{3-2}, ..., c_{3-D}]) \quad \text{(Formula 13)}$$

$W_{3-1}$ *to* $H_{3-K}$ represent K pieces of restored information obtained before the third compressed information feedback periodicity, and $c_{3-1}$ *to* $c_{3-D}$ represent D pieces of compressed information received before the third compressed information feedback periodicity. The access network device may concatenate the E pieces of restored information and the D pieces of compressed information, and input a concatenation result into the function u, to obtain the restored information $H'_3$ in the third compressed information feedback periodicity, and obtain the ninth state information $S'_3$ in the third compressed information feedback periodicity.

Optionally, the access network device may further monitor restoration performance of a downlink channel. For example, if the access network device determines that the restoration performance of the downlink channel is lower than a first threshold, the access network device may trigger network state resetting, to reduce a probability of incorrectly transferring the state of the decoder network. An optional indicator used to monitor the restoration performance of the downlink channel is a downlink throughput. After obtaining the restored information, the access network device may determine, based on the restored information (or downlink channel information obtained based on the restored information), a precoding matrix, a modulation scheme, and/or the like for data transmission. In a data transmission process, the UE may collect statistics about a throughput in the data transmission process, and feed back the throughput to the access network device. If restoration precision of the downlink channel is relatively low, performance of the precoding matrix, the modulation scheme, and/or the like determined accordingly is impaired, and consequently the throughput may decrease. Therefore, the access network device can determine the restoration performance of the downlink channel based on the feedback of the UE. For example, the access network device may calculate, based on a throughput rate fed back by the UE, a statistical amount such as a mean variance of throughputs within a period of time. If a value of the statistical amount falls within a first range, the access network device determines that the throughput is severely impaired, that is, the access network device may determine that the restoration performance of the downlink channel is lower than the first threshold. The first range is, for example, a range predefined in a protocol, or a range specified by the access network device. The first threshold is, for example, a threshold predefined in a protocol, or a threshold specified by the access network device.

For some features in the embodiment shown in FIG. 8, for example, compressed information, restored information, state information of the first decoder network, the first decoder network, and network state resetting, refer to the description of the embodiment shown in FIG. 5.

For example, the embodiment shown in FIG. 8 and the embodiment shown in FIG. 5 may be used in combination. For example, in the embodiment shown in FIG. 5, the UE may send compressed information to the access network device based on a compressed information feedback periodicity. In one compressed information feedback periodicity, if the access network device receives compressed information from the UE, the access network device may perform processing according to the method described in the embodiment shown in FIG. 5. If the access network device receives no compressed information from the UE, the access network device may perform processing according to the method described in the embodiment shown in FIG. 8. Alternatively, the embodiment shown in FIG. 8 and the embodiment shown in FIG. 5 may not be combined, but separately applied.

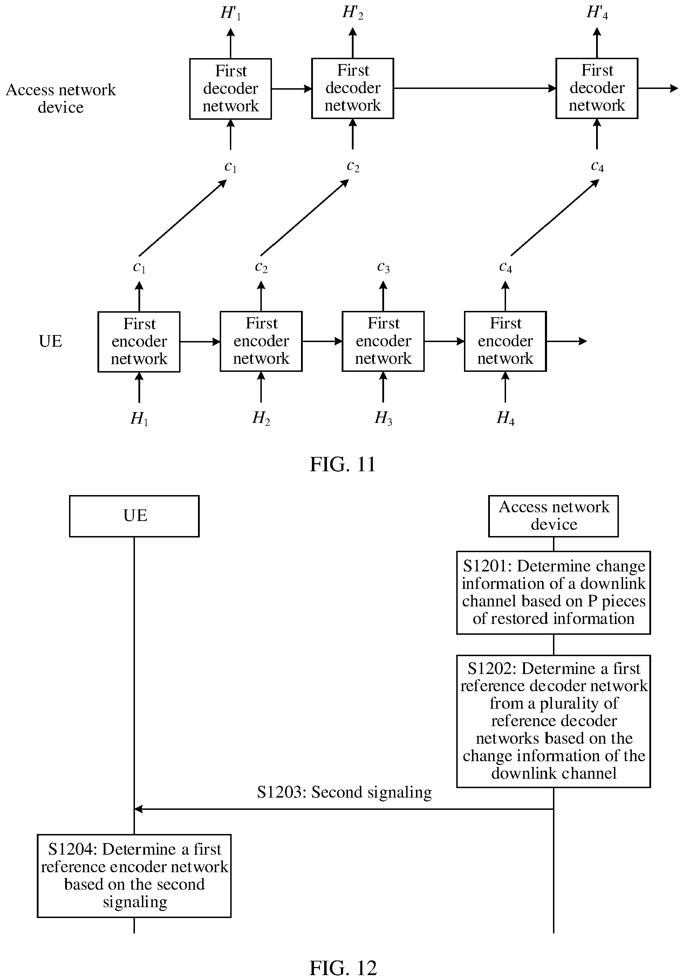

In the embodiment shown in FIG. 8, the UE sends compressed information based on a compressed information feedback periodicity. Therefore, the access network device can determine whether the compressed information is lost (that is, the access network device can determine specific time for receiving the compressed information, and if the compressed information is not received, it can be determined that the compressed information is lost). Alternatively, it is possible that the access network device cannot learn whether compressed information is lost. For example, the UE may not periodically send compressed information, and the compressed information may be sent irregularly. In this case, the access network device may not be capable of determining specific time for receiving the compressed information. If the compressed information is not received, the access network device cannot know. In this case, the access network device may perform processing according to a normal procedure. For example, refer to FIG. 11. $c_1$ to $c_4$ represent compressed information reported by the UE in four compressed information feedback periodicities; $H_1$ to $H_4$ represent channel estimation results input into the first encoder network in the four compressed information feedback periodicities; and $H'_1$, $H'_2$, and $H'_4$ represent restored information output by the first decoder network in three compressed information feedback periodicities.

In FIG. 11, the access network device fails to receive compressed information $c_3$ sent by the UE in the third time, but the access network device does not know this. In this case, the access network device performs processing according to a normal procedure. After receiving the compressed information $c_4$, the access network device inputs the compressed information $c_4$ and state information obtained based on the compressed information $c_2$ into the first decoder network. That is, the access network device skips the compressed information $c_3$. In this manner, a processing process of the access network device continues, and a processing failure caused by a loss of compressed information does not occur.

Optionally, in this case, the access network device may also monitor restoration performance of a downlink channel, to determine whether to perform network state resetting. For a monitoring manner, refer to the description of the embodiment shown in FIG. 8.

In this disclosure, even if the access network device receives no compressed information from the UE, the access network device can continue processing. For example, the access network device may estimate, based on historical information, compressed information that is not received, or corresponding restored information. Because estimation is performed based on the historical information, a historical downlink channel can be reflected. Therefore, accuracy of an estimation result can be ensured to some extent, and accuracy of a downlink channel restored by the access network device can be improved.

In the foregoing embodiment, the first encoder network is used on a UE side, and the first decoder network is used on an access network device side. As described in the embodiment shown in FIG. 5, one or more groups of reference networks may be obtained through training. Considering that a channel state (or communication scenario) is variable, optionally, one group of reference networks may be applicable to one type of channel state (or communication scenario). In this case, in different channel states, if corresponding encoder networks and decoder networks can be applied, information obtained based on the encoder networks and the decoder networks is better adapted to the channel states. Therefore, this disclosure provides a third communication method, and how to select an encoder network and a decoder network is described by using the method. FIG. 12 is a flowchart of the method.

S1201: An access network device determines change information of a downlink channel based on P pieces of restored information. For the P pieces of restored information, refer to the description of the embodiment shown in FIG. 5.

For example, the access network device may determine the change information of the downlink channel based on the P pieces of restored information; or the access network device may obtain downlink channel information based on the P pieces of restored information, and determine the change information of the downlink channel based on the downlink channel information. Optionally, the change information of the downlink channel includes, for example, change speed information of the downlink channel. A change speed of the downlink channel includes, for example, a change speed of the downlink channel in time domain and/or a change speed of the downlink channel in frequency domain.

The access network device may determine the channel change speed based on a plurality of pieces of downlink channel information in a plurality of manners. The following describes one of optional manners by using an example. For example, there are W pieces of downlink channel information. The access network device separately sums up all elements included in each of the W pieces of downlink channel information (that is, sums up all elements included in a first piece of downlink channel information in the W pieces of downlink channel information to obtain a value, sums up all elements included in a second piece of downlink channel information in the W pieces of downlink channel information to obtain a value, and so on), to obtain W values. The access network device arranges the W values into a W-dimensional complex number vector based on a time sequence corresponding to corresponding downlink channel information. The access network device performs discrete Fourier transform on the complex number vector to obtain a new W-dimensional complex number vector, where the new W-dimensional complex number vector is a channel representation in Doppler domain. In the channel representation in Doppler domain, a location of a peak value is highly related to a channel change.

Therefore, an estimated value of the channel change may be obtained based on a subscript corresponding to a largest element in the new W-dimensional vector, and the estimated value may be used as a change speed of a downlink channel. For example, a correspondence between a subscript and an estimated value of a channel change may be determined in advance, and then the estimated value of the channel change corresponding to the subscript corresponding to the largest element in the new W-dimensional vector may be determined by querying the correspondence.

S 1202: The access network device determines a first reference decoder network from a plurality of reference decoder networks based on the change information of the downlink channel.

For example, in this disclosure, a plurality of groups of reference networks are obtained through training. Each group of reference networks may include one reference encoder network and one corresponding reference decoder network. In this case, the plurality of groups of reference networks include a plurality of reference decoder networks and a plurality of reference encoder networks. For example, the change information of the downlink channel includes the change speed of the downlink channel. Optionally, a reference decoder network (or a reference network or a reference encoder network) is in a one-to-one correspondence with a channel state. For example, one group of reference networks may correspond to one change speed range, and one change speed range may correspond to at least one group of reference networks.

After determining the change speed of the downlink channel, the access network device may determine a change speed range to which the change speed belongs, so as to determine a reference decoder network corresponding to the change speed range. If the change speed range corresponds to a plurality of reference decoder networks, the access network device may determine one reference decoder network from the plurality of reference decoder networks, for example, in a random determining manner. For example, the reference decoder network determined by the access network device is the first reference decoder network.

If the access network device subsequently receives compressed information from UE, the first decoder network may be used for processing. Optionally, the access network device may use the first reference decoder network as a first decoder network, or the access network device may determine a first decoder network based on the first reference decoder network. For example, a feature of the first decoder network may be determined based on a feature of the first reference decoder network. For a manner in which the access network device determines the first decoder network based on the first reference decoder network, refer to S502 in the embodiment shown in FIG. 5.

S1203: The access network device sends second signaling to the UE. Correspondingly, the UE receives the second signaling from the access network device.

The second signaling may indicate the change information of the downlink channel, or indicate a first encoder network, or indicate the first decoder network, or indicate a first reference network, or indicate a first reference encoder network, or indicate the first reference decoder network. The first encoder network is an encoder network corresponding to the first decoder network. The first reference network includes the first reference encoder network and the corresponding first reference decoder network. Optionally, the first reference encoder network may serve as the first encoder network, and the first reference decoder network may serve as the first decoder network. Alternatively, the first reference encoder network may be used to determine the first encoder network, for example, a feature of the first encoder network may be determined based on a feature of the first reference encoder network. Similarly, the first reference decoder network may be used to determine the first decoder network. For content such as how the UE determines the first encoder network based on the first reference encoder network, refer to S502 in the embodiment shown in FIG. 5.

S1204: The UE determines the first reference encoder network based on the second signaling.

For example, the change information of the downlink channel includes the change speed of the downlink channel. If the second signaling indicates the change information of the downlink channel, the UE may maintain a correspondence between a change speed (change speed range) of a downlink channel and a reference encoder network. Therefore, the UE may determine the first reference encoder network based on the change speed indicated by the second signaling.

Alternatively, if the second signaling indicates the first encoder network, or indicates the first decoder network, or indicates a reference network including the first encoder network, or indicates the first reference network, or indicates the first reference encoder network, or indicates the first reference decoder network, the UE may determine the first encoder network. For example, if the second signaling indicates the first encoder network, or indicates the first decoder network, or indicates the reference network including the first encoder network, the UE may determine the first encoder network from a plurality of groups of reference networks (or from a plurality of reference encoder networks). For another example, if the second signaling indicates the first reference network, or indicates the first reference encoder network, or indicates the first reference decoder network, the UE may determine the first reference encoder network, and may determine the first encoder network based on the first reference encoder network.

Optionally, if the UE has obtained information about the first encoder network (for example, the access network device has sent the information about the first encoder network to the UE, or the access network device or a third-party device (for example, an AI network element) may send the information about the first encoder to the UE by using the second signaling), the UE may directly use the first encoder network. For example, if the UE needs to generate compressed information subsequently, the first encoder network may be used for processing. If the UE has not obtained the information about the first encoder network, the UE may request the information about the first encoder network from the access network device or the third-party device. After receiving the request, the access network device or the third-party device may send the information about the first encoder network to the UE, so that the UE can use the first encoder network. For a manner in which the access network device sends the information about the first encoder network to the UE, refer to the description of S501 in the embodiment shown in FIG. 5.

In this disclosure, the access network device and the UE may select an appropriate reference decoder network and reference encoder network based on the change information of the downlink channel. This helps adjust a reference network in a timely manner based on a change status of the downlink channel, thereby improving feedback performance of compressed information and improving restoration precision of the access network device for the downlink channel.

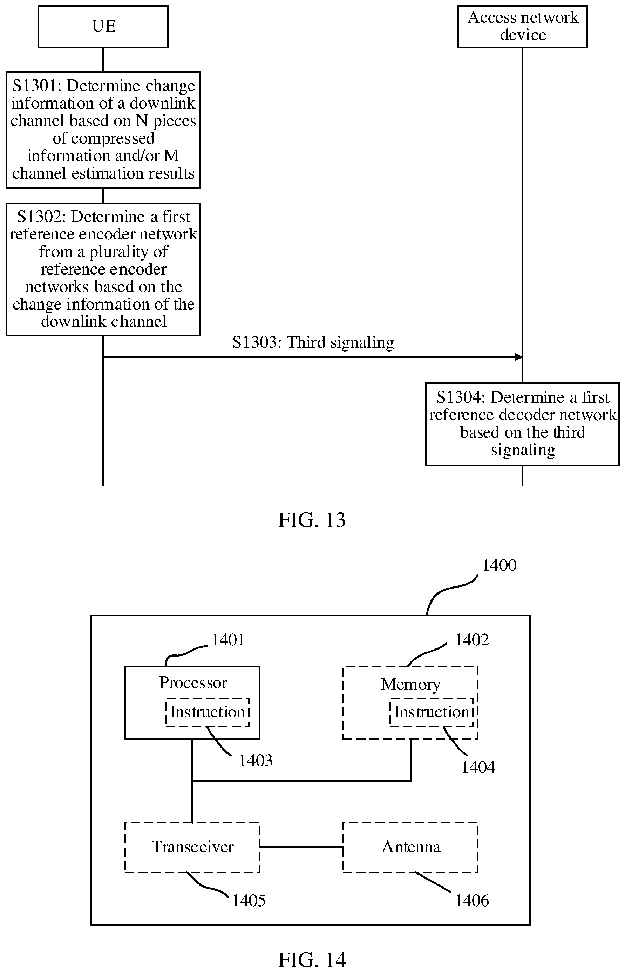

In the embodiment shown in FIG. 12, the access network device determines the reference network. This disclosure further provides a fourth communication method. In this method, selection of a reference network may be determined by UE. FIG. 13 is a flowchart of the method.

S1301: The UE determines change information of a downlink channel based on N pieces of compressed information and/or M channel estimation results. For the N pieces of compressed information and the M channel estimation results, refer to the description of the embodiment shown in FIG. 5.

Optionally, the change information of the downlink channel includes, for example, change speed information of the downlink channel. A change speed of the downlink channel includes, for example, a change speed of the downlink channel in time domain and/or a change speed of the downlink channel in frequency domain. For a manner in which the UE estimates a channel change speed based on a plurality of channel estimation results, refer to the manner in which the access network device estimates a channel change speed based on a plurality of pieces of restored information that is recorded in S1201 in the embodiment shown in FIG. 12.

S1302: The UE determines a first reference encoder network from a plurality of reference encoder networks based on the change information of the downlink channel.

Optionally, before performing S1302, the UE may obtain information about the plurality of reference encoder networks in advance. If the UE has obtained the information about the plurality of reference encoder networks (for example, an access network device or a third-party device (for example, an AI network element) has sent the information about the plurality of reference encoder networks to the UE, or the UE may autonomously obtain the plurality of reference encoder networks and a plurality of corresponding reference decoder networks through training), the UE may perform S1302. In addition, after determining the first reference encoder network, the UE may apply a first encoder network. For example, if the UE needs to generate compressed information subsequently, the first encoder network may be used for processing. Alternatively, if the UE has not obtained the information about the plurality of encoder networks, the UE may request the information about the plurality of encoder networks from the access network device. After receiving the request, the access network device may send the information about the plurality of encoder networks to the UE, so that the UE may perform S1302. For a manner in which the access network device sends the information about the plurality of encoder networks to the UE, refer to the description of S501 in the embodiment shown in FIG. 5.

Optionally, the UE may use the first reference encoder network as the first encoder network, or the UE may determine the first encoder network based on the first reference encoder network. For example, a feature of the first encoder network may be determined based on a feature of the first reference encoder network.

For more content of S1302, refer to S1202 in the embodiment shown in FIG. 12.

S1303: The UE sends third signaling to the access network device. Correspondingly, the access network device receives the third signaling from the UE.

The third signaling may indicate the change information of the downlink channel, or indicate the first encoder network, or indicate a reference network including the first encoder network, or indicate a first decoder network, or indicate a first reference network, or indicate the first reference encoder network, or indicate a first reference decoder network. For descriptions of concepts such as the first reference network, the first decoder network, and the first reference decoder network, refer to S1203 in the embodiment shown in FIG. 12.

S1304: The access network device determines the first reference decoder network based on the third signaling.

Optionally, if the access network device has obtained information about the first reference decoder network (for example, a third-party device (for example, an AI network element) has sent information about a plurality of reference decoder networks to the access network device; or the access network device may autonomously obtain a plurality of reference decoder networks and a plurality of corresponding reference encoder networks through training; or a reference encoder network and a reference decoder network are trained by the UE, and the UE has sent information about a plurality of trained reference decoder networks to the access network device), the access network device may perform S1304, and may directly use the first decoder network subsequently. For example, if the access network device needs to obtain restored information subsequently, the first decoder network may be used for processing. If the access network device has not obtained information about the first decoder network, the access network device may request the information about the first encoder network from the UE or the third-party device. After receiving the request, the UE or the third-party device may send the information about the first decoder network to the access network device, so that the access network can use the first decoder network. For a manner in which the third-party device or the UE sends the information about the first decoder network to the access network device, refer to the description of S501 in the embodiment shown in FIG. 5. For a manner in which the access network device determines the first decoder network, refer to S1204 in the embodiment shown in FIG. 12.

In addition, for more content of S1304, for example, how to determine the first reference decoder network or the first decoder network according to an indication of second signaling, refer to S1204 in the embodiment shown in FIG. 12.

In this disclosure, the UE may select an appropriate reference decoder network and reference encoder network based on the change information of the downlink channel. This helps adjust a reference network in a timely manner based on a change status of the downlink channel, thereby improving feedback performance of compressed information and improving restoration precision of the access network device for the downlink channel. Compared with that in a solution in which the access network device determines a reference network, the UE determines the change speed of the downlink channel more accurately. The UE determines a reference network based on auxiliary information such as the change information of the downlink channel, so that the selected reference network can better comply with a current channel state.

The embodiment shown in FIG. 12 or the embodiment shown in FIG. 13 and the embodiment shown in FIG. 5 may be applied in combination. For example, in the embodiment shown in FIG. 5, before using the first encoder network, the UE may first perform the embodiment shown in FIG. 12 to select the first reference encoder network and the first reference decoder network, and then perform the method provided in the embodiment shown in FIG. 5. Optionally, the second signaling in the embodiment shown in FIG. 12 and the first indication information in the embodiment shown in FIG. 5 are, for example, same information.

Optionally, if the embodiment shown in FIG. 8 is also applied in combination with the embodiment shown in FIG. 5, the embodiments shown in FIG. 5, FIG. 8, and FIG. 12 may be applied in combination.

For another example, in the embodiment shown in FIG. 5, before using the first encoder network, the UE may first perform the embodiment shown in FIG. 13 to select the first reference encoder network and the first reference decoder network, and then perform the method provided in the embodiment shown in FIG. 5. Optionally, the third signaling in the embodiment shown in FIG. 13 and the first indication information in the embodiment shown in FIG. 5 are, for example, same information.

Optionally, if the embodiment shown in FIG. 8 is also applied in combination with the embodiment shown in FIG. 5, the embodiments shown in FIG. 5, FIG. 8, and FIG. 13 may be applied in combination.

Alternatively, the embodiment shown in FIG. 12 may not be combined with the embodiment shown in FIG. 5, but is applied separately. Similarly, the embodiment shown in FIG. 13 may not be combined with the embodiment shown in FIG. 5, but is applied separately.

A communication apparatus provided in this disclosure is described according to the foregoing method embodiments.

This disclosure provides a communication apparatus. The communication apparatus includes, for example, a processing unit and a transceiver unit (or referred to as a communication unit). The processing unit may be configured to implement processing functions of the UE in the foregoing method, and the transceiver unit may be configured to implement all or some receiving and sending functions of the UE in the foregoing method. Alternatively, the processing unit may be configured to implement processing functions implemented by the access network device in the foregoing method, and the transceiver unit may be configured to implement all or some receiving and sending functions of the access network device in the foregoing method.

Optionally, the processing unit and/or the transceiver unit may be implemented by using a virtual module. For example, the processing unit may be implemented by using a software functional unit or a virtual apparatus, and the transceiver unit may be implemented by using a software functional unit or a virtual apparatus. Alternatively, the processing unit and/or the transceiver unit may be implemented by using a physical apparatus (for example, a circuit system and/or a processor). The following describes a case in which the processing unit and the transceiver unit are implemented by using a physical apparatus.

FIG. 14 is a diagram of a structure of a communication apparatus according to this disclosure. The communication apparatus 1400 may be the UE described in the embodiment shown in FIG. 5, the embodiment shown in FIG. 8, the embodiment shown in FIG. 12, or the embodiment shown in FIG. 13, a circuit system of the UE, a circuit system that can be used in the UE, or the like, and is configured to implement the method corresponding to the UE in the foregoing method embodiments. Alternatively, the communication apparatus 1400 may be the access network device described in the embodiment shown in FIG. 5, the embodiment shown in FIG. 8, the embodiment shown in FIG. 12, or the embodiment shown in FIG. 13, a circuit system of the access network device, a circuit system that can be used in the access network device, or the like, and is configured to implement the method corresponding to the access network device in the foregoing method embodiments. For a specific function, refer to the descriptions in the foregoing method embodiments. For example, the circuit system is a chip system.

The communication apparatus 1400 includes one or more processors 1401, configured to implement the foregoing method. The processor 1401 may implement a specific control function. The processor 1401 may be a general-purpose processor, a dedicated processor, or the like. For example, the processor includes a baseband processor, a central processing unit, or the like. The baseband processor may be configured to process a communication protocol and communication data. The central processing unit may be configured to control the communication apparatus 1400, execute a software program, and/or process data. Different processors may be independent components, or may be disposed in one or more processing circuits, for example, integrated in one or more application-specific integrated circuits.

Optionally, the communication apparatus 1400 includes one or more memories 1402, configured to store instructions 1404. The instructions 1404 may be run on the processor, so that the communication apparatus 1400 performs the method described in the foregoing method embodiments. Optionally, the memory 1402 may further store data. The processor and the memory may be separately disposed, or may be integrated together.

Optionally, the processor 1401 may store instructions 1403 (which may also be referred to as code or a program sometimes), and the instructions 1403 may be run on the processor 1401, so that the communication apparatus 1400 performs the method described in the foregoing embodiments. The processor 1401 may store data.

For example, the processing unit is implemented by using the one or more processors 1401, or the processing unit is implemented by using the one or more processors 1401 and the one or more memories 1402, or the processing unit is implemented by using the one or more processors 1401, the one or more memories 1402, and the instructions 1403.

Optionally, the communication apparatus 1400 may further include a transceiver 1405 and an antenna 1406. The transceiver 1405 may be referred to as a transceiver unit, a transceiver machine, a transceiver circuit, a transceiver, an input/output interface, or the like, and is configured to implement sending and receiving functions of the communication apparatus 1400 through the antenna 1406. For example, the transceiver unit is implemented by using the transceiver 1405, or the transceiver unit is implemented by using the transceiver 1405 and the antenna 1406.

Optionally, the communication apparatus 1400 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 1400 may include more or fewer components, or some components are integrated, or some components are split. The components may be implemented by hardware, software, or a combination of software and hardware.

The processor 1401 and the transceiver 1405 described in this disclosure may be implemented on an integrated circuit (integrated circuit, IC), an analog IC, a radio frequency integrated circuit (radio frequency identification, RFID), a mixed-signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a large device (for example, a module that can be embedded in another device). For details, refer to descriptions of the UE and the access network device in the foregoing embodiments. Details are not described herein again.

This disclosure provides a terminal device, and the terminal device may be used in the foregoing embodiments. The terminal device includes corresponding means (means), units, and/or circuits for implementing the function of the UE in the embodiment shown in FIG. 5, the embodiment shown in FIG. 8, the embodiment shown in FIG. 12, or the embodiment shown in FIG. 13. For example, the terminal device includes a transceiver module (or referred to as a transceiver unit), configured to support the terminal device in implementing sending and receiving functions; and a processing module (or referred to as a processing unit), configured to support the terminal device in processing a signal.

This disclosure further provides an access network device, and the access network device may be used in the foregoing embodiments. The access network device includes corresponding means (means), units, and/or circuits for implementing the function of the access network device in the embodiment shown in FIG. 5, the embodiment shown in FIG. 8, the embodiment shown in FIG. 12, or the embodiment shown in FIG. 13. For example, the access network device includes a transceiver module (or referred to as a transceiver unit), configured to support the access network device in implementing sending and receiving functions; and a processing module (or referred to as a processing unit), configured to support the access network device in processing a signal.

All or some of the technical solutions provided in this disclosure may be implemented by software, hardware, firmware, or any combination thereof. When software is used for implementation, all or some of the technical solutions may be implemented in a form of a computer program product. The computer program product includes one or more computer instructions. When the computer program instructions are loaded and executed on a computer, the procedures or functions according to this disclosure are all or partially generated. The computer may be a general-purpose computer, a dedicated computer, a computer network, an access network device, a terminal device, an AI node, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

The foregoing descriptions are merely specific implementations of this disclosure, but are not intended to limit the protection scope of this disclosure. Any variation or replacement readily figured out by a person skilled in the art within the technical scope disclosed in this disclosure shall fall within the protection scope of this disclosure. Therefore, the protection scope of this disclosure shall be subject to the protection scope of the claims.

**Claims**

1.   A communication method, applied to a terminal device side, wherein the method comprises:

       obtaining M channel estimation results, wherein M is a positive integer;
       jointly compressing the M channel estimation results by using a first encoder network, to obtain N pieces of compressed information and first state information, wherein the first state information represents downlink channel information, the first state information is used to determine next input information of the first encoder network, and N is a positive integer; and
       sending the N pieces of compressed information to an access network device.

2.   The method according to claim 1, wherein each of the N pieces of compressed information corresponds to the M channel estimation results.

3.   The method according to claim 1 or 2, wherein
     input information of the first encoder network is determined based on the M channel estimation results and second state information, wherein the second state information is state information output by the first encoder network last time.

4.   The method according to claim 1 or 2, wherein the method further comprises:
     receiving first signaling, wherein the first signaling indicates to reset state information of the first encoder network.

5.   The method according to claim 4, wherein

       the first signaling indicates resetting start time and/or an offset; or
       the first signaling indicates resetting start time and/or an offset, and indicates a resetting periodicity.

6.   The method according to claim 4 or 5, wherein

       input information of the first encoder network is determined based on the M channel estimation results; or
       input information of the first encoder network is determined based on the M channel estimation results and third state information, wherein the third state information is determined based on historical information of a downlink channel; or
       input information of the first encoder network is determined based on the M channel estimation results and K channel estimation results, wherein the K channel estimation results are historically obtained downlink channel estimation results; or
       input information of the first encoder network is determined based on the M channel estimation results, third state information, and K channel estimation results, wherein the K channel estimation results are historically obtained downlink channel estimation results, and the third state information is determined based on historical information of a downlink channel.

7.   The method according to any one of claims 1 to 6, wherein the method further comprises:

       receiving second signaling from the access network device, wherein the second signaling indicates change information of the downlink channel, or indicates a first reference encoder network, or indicates a reference network comprising the first reference encoder network; and
       determining the first reference encoder network from a plurality of reference encoder networks based on the second signaling, wherein the first reference encoder network is used to determine the first encoder network.

8. The method according to any one of claims 1 to 6, wherein the method further comprises:

   determining change information of the downlink channel based on the M channel estimation results; and
   determining a first reference encoder network from a plurality of reference encoder networks based on the change information of the downlink channel, wherein the first reference encoder network is used to determine the first encoder network.

9. The method according to claim 8, wherein the method further comprises:
   sending third signaling to the access network device, wherein the third signaling indicates the change information of the downlink channel, or indicates a first reference decoder network corresponding to the first reference encoder network, or indicates a reference network comprising the first reference encoder network.

10. A communication method, applied to an access network device side, wherein the method comprises:

   receiving N pieces of compressed information from a terminal device, wherein N is a positive integer; and
   decoding the N pieces of compressed information by using a first decoder network, to obtain P pieces of restored information and fourth state information, wherein the fourth state information represents downlink channel information, the fourth state information is used to determine next input information of the first decoder network, and P is a positive integer.

11. The method according to claim 10, wherein each of the P pieces of restored information corresponds to the N pieces of compressed information.

12. The method according to claim 10 or 11, wherein
   input information of the first decoder network is determined based on the N pieces of compressed information and fifth state information, wherein the fifth state information is state information output by the first decoder network last time.

13. The method according to claim 10 or 11, wherein the method further comprises:
   sending first signaling, wherein the first signaling indicates to reset state information of a first encoder network, and the first encoder network corresponds to the first decoder network.

14. The method according to claim 13, wherein

   the first signaling indicates resetting start time and/or an offset; or
   the first signaling indicates resetting start time and/or an offset, and indicates a resetting periodicity.

15. The method according to claim 13 or 14, wherein

   input information of the first decoder network is determined based on the N pieces of compressed information; or
   input information of the first decoder network is determined based on the N pieces of compressed information and sixth state information, wherein the sixth state information is determined based on historical information of a downlink channel.

16. The method according to any one of claims 10 to 15, wherein the method further comprises:

   in one compressed information feedback periodicity, determining that no compressed information is received from the terminal device;
   estimating, based on historically received compressed information and/or historically obtained restored information, first compressed information corresponding to the compressed information feedback periodicity; and
   obtaining first restored information and eighth state information that are output by the first decoder network, wherein an input of the first decoder network is obtained based on seventh state information and the first compressed information, the seventh state information is state information output by the first decoder network last time, and the eighth state information is used to determine next input information of the first decoder network.

17. The method according to any one of claims 10 to 15, wherein the method further comprises:

   in one compressed information feedback periodicity, determining that no compressed information is received from the terminal device; and

estimating, based on historically received compressed information and/or historically obtained restored information, restored information and ninth state information that correspond to the compressed information feedback periodicity, wherein the ninth state information is used to determine next input information of the first decoder network.

18. The method according to any one of claims 10 to 17, wherein the method further comprises:

determining change information of the downlink channel based on the P pieces of restored information; and determining a first reference decoder network from a plurality of reference decoder networks based on the change information of the downlink channel, wherein the first reference decoder network is used to determine the first decoder network.

19. The method according to claim 18, wherein the method further comprises:
sending second signaling to the terminal device, wherein the second signaling indicates the change information of the downlink channel, or indicates a first reference encoder network, or indicates a reference network comprising the first reference encoder network, and the first reference encoder network corresponds to the first reference decoder network.

20. The method according to any one of claims 10 to 17, wherein the method further comprises:

receiving third signaling from the terminal device, wherein the third signaling indicates the change information of the downlink channel, or indicates a first reference decoder network, or indicates a reference network comprising a first reference encoder network, and the first reference encoder network corresponds to the first reference decoder network; and
determining the first reference decoder network from a plurality of reference decoder networks based on the third signaling, wherein the first reference decoder network is used to determine the first decoder network.

21. A communication method, applied to a terminal device side, wherein the method comprises:

obtaining M channel estimation results, wherein M is a positive integer;
processing first information by using a first encoder network, to obtain N pieces of compressed information and first state information, wherein the first information is determined based on the M channel estimation results and tenth state information, the tenth state information represents downlink channel information, and N is a positive integer; and
sending the N pieces of compressed information to an access network device.

22. The method according to claim 21, wherein each of the N pieces of compressed information corresponds to the M channel estimation results.

23. The method according to claim 21 or 22, wherein the tenth state information is state information output by the first encoder network last time.

24. The method according to claim 21 or 22, wherein the method further comprises:
receiving first signaling, wherein the first signaling indicates to reset state information of the first encoder network.

25. The method according to claim 24, wherein the first signaling indicates resetting start time and/or an offset; or
the first signaling indicates resetting start time and/or an offset, and indicates a resetting periodicity.

26. The method according to claim 24 or 25, wherein

the tenth state information is an initial value; or
the tenth state information is determined based on historical information of a downlink channel.

27. The method according to any one of claims 24 to 26, wherein the first information is determined based on the M channel estimation results, the tenth state information, and K channel estimation results, and the K channel estimation results are historically obtained downlink channel estimation results.

28. The method according to any one of claims 21 to 27, wherein the method further comprises:

receiving second signaling from the access network device, wherein the second signaling indicates change information of the downlink channel, or indicates a first reference encoder network, or indicates a reference network comprising the first reference encoder network; and

determining the first reference encoder network from a plurality of reference encoder networks based on the second signaling, wherein the first reference encoder network is used to determine the first encoder network.

29. The method according to any one of claims 21 to 27, wherein the method further comprises:

determining change information of the downlink channel based on the M channel estimation results; and determining a first reference encoder network from a plurality of reference encoder networks based on the change information of the downlink channel, wherein the first reference encoder network is used to determine the first encoder network.

30. The method according to claim 29, wherein the method further comprises:
sending third signaling to the access network device, wherein the third signaling indicates the change information of the downlink channel, or indicates a first reference decoder network corresponding to the first reference encoder network, or indicates a reference network comprising the first reference encoder network.

31. A communication method, applied to an access network device side, wherein the method comprises:

receiving N pieces of compressed information from a terminal device, wherein N is a positive integer; and processing second information by using a first decoder network, to obtain P pieces of restored information and fourth state information, wherein the second information is determined based on the N pieces of compressed information and eleventh state information, the eleventh state information represents downlink channel information, and P is a positive integer.

32. The method according to claim 31, wherein each of the P pieces of restored information corresponds to the N pieces of compressed information.

33. The method according to claim 31 or 32, wherein the eleventh state information is state information output by the first decoder network last time.

34. The method according to claim 31 or 32, wherein the method further comprises:
sending first signaling, wherein the first signaling indicates to reset state information of a first encoder network, and the first encoder network corresponds to the first decoder network.

35. The method according to claim 34, wherein

the first signaling indicates resetting start time and/or an offset; or
the first signaling indicates resetting start time and/or an offset, and indicates a resetting periodicity.

36. The method according to claim 34 or 35, wherein

the eleventh state information is an initial value; or
the eleventh state information is determined based on historical information of a downlink channel.

37. The method according to any one of claims 31 to 36, wherein the method further comprises:

in one compressed information feedback periodicity, determining that no compressed information is received from the terminal device;
estimating, based on historically received compressed information and/or historically obtained restored information, first compressed information corresponding to the compressed information feedback periodicity; and
obtaining first restored information and eighth state information that are output by the first decoder network, wherein an input of the first decoder network is obtained based on seventh state information and the first compressed information, the seventh state information is state information output by the first decoder network last time, and the eighth state information is used to determine next input information of the first decoder network.

38. The method according to any one of claims 31 to 36, wherein the method further comprises:

in one compressed information feedback periodicity, determining that no compressed information is received from the terminal device; and

estimating, based on historically received compressed information and/or historically obtained restored information, restored information and ninth state information that correspond to the compressed information feedback periodicity, wherein the ninth state information is used to determine next input information of the first decoder network.

39. The method according to any one of claims 31 to 38, wherein the method further comprises:

determining change information of the downlink channel based on the P pieces of restored information; and determining a first reference decoder network from a plurality of reference decoder networks based on the change information of the downlink channel, wherein the first reference decoder network is used to determine the first decoder network.

40. The method according to claim 39, wherein the method further comprises:
sending second signaling to the terminal device, wherein the second signaling indicates the change information of the downlink channel, or indicates a first reference encoder network, or indicates a reference network comprising the first reference encoder network, and the first reference encoder network corresponds to the first reference decoder network.

41. The method according to any one of claims 31 to 38, wherein the method further comprises:

receiving third signaling from the terminal device, wherein the third signaling indicates the change information of the downlink channel, or indicates a first reference decoder network, or indicates a reference network comprising a first reference encoder network, and the first reference encoder network corresponds to the first reference decoder network; and

determining the first reference decoder network from a plurality of reference decoder networks based on the third signaling, wherein the first reference decoder network is used to determine the first decoder network.

42. A model training method, wherein the method comprises:
operation 1: for each piece of training data in an $i^{th}$ group of training data, sequentially performing the following operations:

operation 1-1: determining M channel estimation results based on each piece of training data, and jointly compressing the M channel estimation results by using an encoder network, to obtain N pieces of compressed information and first state information, wherein the first state information is used to determine next input information of the first encoder network, and N is a positive integer; and

operation 1-2: decoding the N pieces of compressed information by using a reference decoder network, to obtain P pieces of restored information and fourth state information, wherein the fourth state information is used to determine next input information of the first decoder network, and P is a positive integer; and

operation 2: for the $i^{th}$ group of training data, if a loss function satisfies a performance requirement, ending training, and obtaining a reference encoder and/or a reference decoder; or if a loss function does not satisfy a performance requirement, i=i+1, updating a reference encoder and/or a reference decoder, and performing operation 1 again.

43. A communication apparatus, configured to implement the method according to any one of claims 1 to 9, or configured to implement the method according to any one of claims 21 to 30.

44. A communication apparatus, comprising a processor and a memory, wherein the memory is coupled to the processor, and the processor is configured to perform the method according to any one of claims 1 to 9, or is configured to perform the method according to any one of claims 21 to 30.

45. A communication apparatus, configured to implement the method according to any one of claims 10 to 20, or configured to implement the method according to any one of claims 31 to 41.

46. A communication apparatus, comprising a processor and a memory, wherein the memory is coupled to the processor, and the processor is configured to perform the method according to any one of claims 10 to 20, or is configured to perform the method according to any one of claims 31 to 41.

**47.** A communication apparatus, configured to implement the method according to claim 42.

**48.** A communication apparatus, comprising a processor and a memory, wherein the memory is coupled to the processor, and the processor is configured to perform the method according to claim 42.

**49.** A communication system, comprising the communication apparatus according to claim 43 or 44 and the communication apparatus according to claim 45 or 46.

**50.** The communication system according to claim 49, wherein the communication system further comprises the communication apparatus according to claim 47 or 48.

**51.** A computer-readable storage medium, wherein the computer-readable storage medium is configured to store instructions, and when the instructions are run on a computer, the computer is enabled to perform the method according to any one of claims 1 to 9, or the computer is enabled to perform the method according to any one of claims 10 to 20, or the computer is enabled to perform the method according to any one of claims 21 to 30, or the computer is enabled to perform the method according to any one of claims 31 to 41, or the computer is enabled to perform the method according to claim 42.

**52.** A computer program product, comprising instructions, wherein when the instructions are run on a computer, the computer is enabled to perform the method according to any one of claims 1 to 9, or the computer is enabled to perform the method according to any one of claims 10 to 20, or the computer is enabled to perform the method according to any one of claims 21 to 30, or the computer is enabled to perform the method according to any one of claims 31 to 41, or the computer is enabled to perform the method according to claim 42.

FIG. 1

FIG. 2

Network device

Terminal
device

FIG. 3

Performance
feedback

Training data | Model training
node

Model
deployment/
update | Model
feedback

Data
source

Inference
data | Model
inference node | Output | Execution | Execution | Execution
object

Execution | Execution
object

FIG. 4A

FIG. 4B

FIG. 4C

FIG. 4D

FIG. 4E

| UE | | Access network device |
|----|----|----|

S501: Obtain M channel estimation results

S502: Jointly compress the M channel estimation results by using a first encoder network, to obtain N pieces of compressed information and first state information

S503: N pieces of compressed information

S504: Decode the N pieces of compressed information by using a first decoder network, to obtain P pieces of restored information and fourth state information

FIG. 5

Training data

k=1

Select k<sup>th</sup> channel
information

k=k+1

Reference encoder
network

No

No

Reference decoder
network

k=T?

Yes

Does a loss function
satisfy a requirement?

Yes

Updated model

FIG. 6A

Training data

k=1

Select channel estimation results included in downlink channel information for A previous times and input the channel estimation results into a first AI network

If k=T

Select $k^{th}$ channel information

k=k+1

Reference encoder network

No

No

Compressed information and restored information for A times

If k=T

Reference decoder network

k=T'?

Yes

Does a loss function satisfy a requirement?

Yes

Updated model

FIG. 6B

$c_{-K}$

$f_{-K}$

$s_{-N}$

...

$s_{-2}$

$c_{-1}$

$f_{-1}$

$s_{-1}$

$c_0$

$f_0$

$s_0$

$H_{-K}$

$H_{-1}$

$H_0$

FIG. 7A

$$H'_0$$

| $g_{-N+1}$ | $\xrightarrow{s'_{-N+1}}$ | ... | $\xrightarrow{s'_{-2}}$ | $g_{-1}$ | $\xrightarrow{s'_{-1}}$ | $g_0$ | $\xrightarrow{s'_0}$ |

$c_{-N+1}$                                    $c_{-1}$      $c_0$

FIG. 7B

| In one compressed information feedback periodicity, an access network device determines that no compressed information is received from UE | S801 |
| The access network device estimates, based on historically received compressed information and/or historically obtained restored information, first compressed information corresponding to the compressed information feedback periodicity | S802 |
| The access network device decodes the first compressed information by using a first decoder network, to obtain first restored information and eighth state information | S803 |

FIG. 8

$\{H'_1, H'_2, ...\}$ $\longrightarrow$ Estimation $\longrightarrow$ $c'_3$
$\{c_1, c_2, ...\}$ $\longrightarrow$

$H'_1$     $H'_2$     $H'_3$     $H'_4$

Access network device

| First decoder network | First decoder network | First decoder network | First decoder network |

$c_1$     $c_2$     $c'_3$     $c_4$

$c_1$     $c_2$     $c_3$     $c_4$

UE

| First encoder network | First encoder network | First encoder network | First encoder network |

$H_1$     $H_2$     $H_3$     $H_4$

FIG. 9

$\{H'_1, H'_2, ...\}$

$\{c_1, c_2, ...\}$

Estimation $\longrightarrow H'_3$

State
information

$H'_1$    $H'_2$    $H'_4$

Access network
device

First
decoder
network

First
decoder
network

First
decoder
network

$c_1$    $c_2$    $c_4$

$c_1$    $c_2$    $c_3$    $c_4$

UE

First
encoder
network

First
encoder
network

First
encoder
network

First
encoder
network

$H_1$    $H_2$    $H_3$    $H_4$

FIG. 10

$$H'_1 \qquad H'_2 \qquad\qquad H'_4$$

Access network device

First decoder network → First decoder network → First decoder network →

$$c_1 \qquad\qquad c_2 \qquad\qquad\qquad c_4$$

UE

First encoder network → First encoder network → First encoder network → First encoder network →

$$c_1 \qquad c_2 \qquad c_3 \qquad c_4$$

$$H_1 \qquad H_2 \qquad H_3 \qquad H_4$$

FIG. 11

UE

Access network device

S1201: Determine change information of a downlink channel based on P pieces of restored information

S1202: Determine a first reference decoder network from a plurality of reference decoder networks based on the change information of the downlink channel

S1203: Second signaling

S1204: Determine a first reference encoder network based on the second signaling

FIG. 12

UE

Access network device

S1301: Determine change information of a downlink channel based on N pieces of compressed information and/or M channel estimation results

S1302: Determine a first reference encoder network from a plurality of reference encoder networks based on the change information of the downlink channel

S1303: Third signaling

S1304: Determine a first reference decoder network based on the third signaling

FIG. 13

1400

Processor
1401

Instruction

1403

Memory
1402

Instruction

1404

Transceiver

1405

Antenna

1406

FIG. 14

# INTERNATIONAL SEARCH REPORT

| International application No. |
| --- |
| **PCT/CN2023/088624** |

**A. CLASSIFICATION OF SUBJECT MATTER**

H04B7/06(2006.01)i

According to International Patent Classification (IPC) or to both national classification and IPC

**B. FIELDS SEARCHED**

Minimum documentation searched (classification system followed by classification symbols)

IPC: H04B H04L H04W

Documentation searched other than minimum documentation to the extent that such documents are included in the fields searched

Electronic data base consulted during the international search (name of data base and, where practicable, search terms used)

CNTXT, ENTXTC, ENTXT, WPI, 3GPP: 信道状态, CSI, 下行信道, 准确, 精确, 上一次, 上次, 之前, 以前, 先前, 时域, 时间, 相关, 压缩, 编码, 解码, 训练, 神经, 损失函数, channel state, downlink, PDSCH, PDCCH, accurate, previous, time, encod+, decod+, train, model, neural, NN, AE

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022040160 A2 (QUALCOMM INCORPORATED) 24 February 2022 (2022-02-24) description, paragraphs 68-72 and 144-167, and figure 3 | 1-52 |
| X | US 2022094411 A1 (QUALCOMM INCORPORATED) 24 March 2022 (2022-03-24) description, paragraphs 85-105, and figures 5-6 | 1-52 |
| A | CN 113098804 A (SOUTHEAST UNIVERSITY) 09 July 2021 (2021-07-09) entire document | 1-52 |
| A | CN 113992309 A (HUAWEI TECHNOLOGIES CO., LTD.) 28 January 2022 (2022-01-28) entire document | 1-52 |
| A | US 2018322388 A1 (VIRGINIA TECH INTELLECTUAL PROPERTIES, INC.) 08 November 2018 (2018-11-08) entire document | 1-52 |
| A | WO 2022075905 A1 (TELEFONAKTIEBOLAGET LM ERICSSON (PUBL)) 14 April 2022 (2022-04-14) entire document | 1-52 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 June 2023** | **29 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/088624**

| Patent document cited in search report | | | Publication date (day/month/year) | Patent family member(s) | | | Publication date (day/month/year) |
|---|---|---|---|---|---|---|---|
| WO | 2022040160 | A2 | 24 February 2022 | IN | 202247077146 | A | 06 January 2023 |
| US | 2022094411 | A1 | 24 March 2022 | WO | 2022061354 | A1 | 24 March 2022 |
| | | | | BR | 112023004155 | A2 | 04 April 2023 |
| CN | 113098804 | A | 09 July 2021 | None | | | |
| CN | 113992309 | A | 28 January 2022 | WO | 2022022331 | A1 | 03 February 2022 |
| US | 2018322388 | A1 | 08 November 2018 | JP | 2020520497 | A | 09 July 2020 |
| | | | | WO | 2018204632 | A1 | 08 November 2018 |
| | | | | EP | 3619656 | A1 | 11 March 2020 |
| | | | | KR | 20200004340 | A | 13 January 2020 |
| | | | | US | 2019188565 | A1 | 20 June 2019 |
| | | | | US | 2023055213 | A1 | 23 February 2023 |
| | | | | CN | 111512323 | A | 07 August 2020 |
| WO | 2022075905 | A1 | 14 April 2022 | None | | | |

Form PCT/ISA/210 (patent family annex) (July 2022)

**EP 4 503 463 A1**

**Patent documents cited in the description**

- CN 202210407888